# EUROPEAN PATENT APPLICATION

(11) **EP 4 465 022 A1**
(43) Date of publication of application: **20.11.2024**
(21) Application number: 23382469.7
(22) Date of filing: 19.05.2023
(51) Int. Cl.: G01N 21/65, G01N 21/27, G01N 21/64

(54) **SAMPLE FOR CALIBRATION OF RAMAN INSTRUMENTS**

(71) Applicant: Consejo Superior De Investigaciones Científicas, 28006 Madrid (ES); Elodiz Ltd, High Wycombe HP11 2LT (GB)
(72) Inventor: FERNÁNDEZ ALVAREZ, María, 28049 Madrid (ES); FERNÁNDEZ LOZANO, José Francisco, 28049 Madrid (ES); MARÍN CORTES, Sonia, 28049 Madrid (ES); JIMÉNEZ REINOSA, Julián, 28049 Madrid (ES); MOURE ARROYO, Alberto, 28049 Madrid (ES); LOZANO DIZ, Enrique, High Wycombe, HP11 2LT (GB)
(74) Representative: ABG Intellectual Property Law, S.L.

(57) **Abstract**

A material is described for calibrating the intensity of Raman or photoluminescent spectroscopic measurement instruments operated at an excitation wavelength, said material having a substantially uniform thickness and comprising a thermoset polymer matrix and particles of a metal oxide, metal carbonate or a carbonaceous material dispersed homogeneously in said thermoset polymer matrix.

## Description

The present invention relates to a material for calibrating the intensity of Raman or photoluminescent spectroscopic measurement instruments operated at an excitation wavelength, said material having a substantially uniform thickness and comprising a thermoset polymer matrix and particles dispersed homogeneously in said thermoset polymer matrix.

### BACKGROUND ART

Raman spectroscopy is an analysis technique that is gaining interest in industry as it allows defining a genuine fingerprint for a myriad of samples in a fast and easy to implement manner, whereby no specific preparation of the sample to be analysed is advantageously required. Raman spectroscopy is a technique studying the response of a sample irradiated with a monochromatic light, such as a laser in the visible or near infra-red range of wavelength. Once irradiated, molecular vibrations, phonons or other excitations in the system, resulting in the energy of the laser photons being shifted up or down. Three types of scattering are known in the art: Rayleigh scattering (elastic), Stokes scattering (inelastic) and anti-Stokes scattering (superelastic). Raman spectroscopy observes the change in energy between the incident and scattered photons associated with the Stokes and anti-Stokes transitions. This is typically measured as the change in the wavenumber (cm-1), from the incident light source. The intensity of Raman signal is generally very weak. Typically, Raman spectroscopy measures the polarizability of a bond between two atoms.

In addition, the intensity of the Raman signal of a sample is affected by a large number of parameters such as quantum-efficiency of the detector, laser wavelength, grating efficiency, reflection and/or transmission efficiencies of the optical components (e.g. objective(s), grating, mirrors, optics...). As a result, the intensity of a Raman signal of a same sample will vary from an instrument to the other, which hampers harmonization of Raman measurements. Thus, in order to extract quantitative information from Raman spectra, a previous calibration of Raman spectrometers is necessary. In this regard, several methods have been developed in the art to calibrate the intensity of Raman signals, some of which have been accepted as standards. Such standards have been reviewed extensively by Ntziouni and co-workers in Review of Existing standards, Guides, and Practices for Raman Spectroscopy Applied Spectropscopy 2022, vol. 76(7), 747-772.

Manufacturers of spectrometers typically implement their own methods for controlling the implementation and stability of their instruments, yet no universally accepted method exist in this regard. There is a need for such method in order to unlock the full potential of Raman spectroscopy.

There exist two different types of calibration of Raman spectrometer. On the one hand, Raman spectrometers can be calibrated in relation with the measured shift of the wavelength of the scattered light. Such signal is typically affected by temperature, instable incident wavelength, instabilities and non-linear distortions. Standard ASTM E1840-96 proposes eight reference samples covering a shift range of from 85 to 3327 cm⁻¹, said samples being available in high purity: those are naphthalene, 1,4-bis(2-methylstyryl) benzene, sulfur, a mixture of toluene and acetonitrile, Tylenol, benzonitrile, cyclohexane and polystyrene. Amongst those materials, those exhibiting physical and chemical stability are typically favoured. This is the case of polystyrene, which is a solid and is thus easier to handle.

In this regard, N. Itoh and N. Hanari disclose in Development of a Polystyrene Reference Material for Raman Spectrometer (NMIJ RM 8158-a), Anal. Sci. 37 (2021) 1533-1539 a sample reference materials useful for the calibration of the chemical shift of Raman signals consisting of polystyrene disks. The reference disks were prepared by injection moulding of polystyrene pellets followed by a polishing step for providing a mirror finish to a surface of the disk. The polishing is typically necessary to suppress any undesired light scattering arising from surface defaults for all reference samples used in calibration of Raman spectrometers. The authors also study the chemical shift of Raman signals of the prepared disk of polystyrene in function of the uncertainties related to wavelength measurement, spectral window, and stability of the sample, inhomogeneity between and within disks. To this end, a HeNe emission lamp is used, which provides a minimal variance in the wavelength of the incident beam. The reference values of the Raman shift of polystyrene and the related uncertainties are also provided. While the authors disclose that polystyrene disks with a polished surface are useful reference samples for Raman shift calibration, they remain silent about any method for the calibration of Raman signal intensity.

On the other hand, Raman spectrometers can be calibrated in relation with the intensity of the signal at a given shift of scattered light. Industrial standard ASTM E2911 addresses the correction of the relative intensity in Raman spectra. Two distinct methods proposed by the National Institute of Standards and Technologies are disclosed in order to produce and validate a curve for the correction of the relative intensity of the signals: a first method employing a calibrated source of radiation (e.g. tungsten lamp), and a second method employing reference materials. These methods are used to compare the intensity of signals for the same sample measured with different apparatus and/or at different wavelengths.

Standard materials for Raman spectroscopy developed by NIST for different chemical shifts are SRM 2241 (785 nm), SRM 2242 (532 nm), SRM 2243 (514.5 and 488 nm), SRM 2244 (1064nm), SRM 2245 (633 nm), SRM 2246 (830 nm). These materials consist of optic-grade glasses doped with different elements providing for a well-defined luminescence signal at different Raman shifts. S.J. Choquette and co-workers disclose in Relative intensity correction of Raman spectrometers: NIST SRMs 2241 through 2243 for 785 nm, 532 nm, and 488 nm/514.5 nm excitation, Appl. Spectrosc. 61 (2007) 117-12 a synthetic procedure for the preparation of these materials. The reference materials were prepared by mixing the glass components in a crucible and heating the resulting mixture at 1415 °C while stirring. The glass was then cooled at 950 °C and re-heated at 1415 °C. The resulting mixture was then poured into a mould of 25 mm thickness and the blocks were annealed overnight. The resulting blocks were then diced in samples of 3 mm thick. The luminescence of the prepared reference samples follows a polynomial behaviour which allows for polynomial regression for both micro and macro Raman devices, thus allowing for correcting the measured intensity of a spectrum. Each of these reference samples are however limited for being used at a specific irradiation wavelength.

No reference sample allowing for the calibration of both shift and signal intensity in one sole measurement has been disclosed in the art. Several methods have been reported for said dual-type calibration and typically employ separate calibration systems for shift and signal intensity. In this regard, patent application DE102011016059A1 discloses a microfluidic system allowing for alternating the measurement of an analyte sample with the calibration of Raman intensity and shift. Said method uses a system of alternating droplets containing on the one hand, the analyte and, on the other hand, the intensity calibration reference sample, whereby the droplets flow in a carrier medium, such as a mineral oil that is used to calibrate the Raman shift. Such system can however not be used to measure solid samples and is limited to microfluidic applications.

Patent application GB2251305 discloses a method for sorting diamonds from ore particles located on a moving belt. The method involves (i) irradiating particles of ore comprising diamond particles located on a moving belt with a beam of light susceptible of generating a Raman response, (ii) detecting particles emitting the anti-Stoke radiation characteristic of diamond materials, and (iii) collecting the particles detected in (ii). In certain embodiments, tracer stones, which may be made of synthetic diamonds mixed with epoxy resin, are placed on a stationary area adjacent to the moving belt. Using a suitable detector, the radiation from the tracer stones can be sensed and processed to increase or decrease the gain of the photomultiplier tubes. However, no information on the preparation and composition of said tracer stone is provided nor is it deducible from this disclosure that said tracer stone is suitable for calibrating the intensity of Raman spectrometers.

From what is known in the art, there is still a need for providing a reference sample for a reliable calibration of intensity of Raman signals at any wavelength.

### SUMMARY OF THE INVENTION

As known in the art, it is a requirement of a reference sample for Raman intensity calibration that the reference sample provides substantially the same response over repeated measurements. In this regard, it is known in the art that the imperfections of the surface of a sample can cause an alteration of the intensity of Raman signal. In this aspect, reference samples for Raman intensity calibration must have a surface as regular as possible, i.e. minimal roughness. Additionally, a reference sample for Raman intensity calibration must provide substantially the same response to excitation when the calibration measurements are carried out at different areas of the sample. After exhaustive research, the inventors have developed a composite material suitable for the calibration of intensity of Raman and luminescence spectroscopic instruments. The composite material of the invention comprises a thermoset polymer matrix and particles of a spectroscopically active material, such as metal oxides, metal carbonates, carbonaceous materials or mixtures thereof, dispersed within said thermoset polymer matrix. The inventors have further devised that the homogeneity of said particle dispersion plays an important role in providing a substantially identical Raman or luminescent response when different areas of the composite material are irradiated at a certain wavelength. The present invention provides a composite material whereby the particles of said spectroscopically active material are dispersed with such homogeneity that a surprisingly low degree of deviation in the response of the sample when irradiated at different areas is surprisingly observed. Thus, unlike similar materials disclosed in the art, the composite materials of the invention are suitable for the calibration of intensity of Raman and luminescence spectroscopic instruments, since they provide a stable and reliable response, which does not depend on the local area of the sample that is being irradiated.

Thus, in a first aspect, the invention relates to a material for calibrating the intensity of Raman or photoluminescent spectroscopic measurement instruments operated at an excitation wavelength, said material having a substantially uniform thickness, comprising:
- a thermoset polymer matrix that is substantially transparent at said excitation wavelength; and
- particles of a metal oxide, a metal carbonate, a carbonaceous material or a mixture thereof, dispersed in said thermoset polymer matrix;
characterized
- in that the Raman cross-section at said excitation wavelength of said metal oxide, metal carbonate, or carbonaceous material is higher than the Raman cross-section of the thermoset polymer matrix at said excitation wavelength; and
- in that the particles are homogeneously dispersed in the matrix such that the standard deviation over 50 measurements of the intensity of the most intense peak assignable to the metal oxide, metal carbonate, or carbonaceous material of the Raman response of said material at said excitation wavelength is lower than 5.5%;
with the proviso that when the material is for calibrating a photoluminescent spectroscopic measurement instrument, the material of the particles is photoluminescent at said excitation wavelength.

The material of the first aspect of the invention can be prepared following a method whereby high shear forces are used to disperse the particles of the spectroscopically active material in the thermoset matrix. A second aspect of the invention relates to a method for the production of a material according to the first aspect of the invention comprising the steps of
(i) providing a curable liquid precursor mixture of the thermoset polymer matrix;
(ii) providing substantially dry particles of metal oxides, metal carbonates, carbonaceous material or a mixture thereof;
(iii) submitting a mixture of the liquid mixture of step (i) with the particles to a mixing step with a shear force equivalent to the shear force produced by a stirring of at least 10000 rpm;
(iv) milling the product of step (iii);
(v) curing the mixture resulting from step (iv) so as to produce the thermoset polymer.

A third aspect of the invention relates to a product obtainable by the method of the second aspect of the invention.

The material of the first or third aspect of the invention may further be inserted within a solid support. This allows easier handling of the reference sample for intensity measurement and allows providing any shape to the material. A fourth aspect of the invention relates to a composition comprising one or more materials as defined on the first or third aspect and a solid support, each material being arranged in a groove formed within said solid support, thus providing a substantially flat surface.

In certain embodiments, said solid support is a material suitable for calibrating the shift of the Raman signals, such that the composition of the fourth aspect advantageously allows for calibrating both shift and intensity of Raman scattering signals.

The material of the first aspect of the invention and the composition of the fourth aspect of the invention are useful for calibrating the intensity of Raman or photoluminescence spectrometers. The fifth aspect of the invention thus relates to the use of a material as defined in the first or third aspect of the invention or of a composition as defined in the fourth aspect of the invention for calibrating the intensity of Raman or photoluminescent spectroscopic measurement instruments operated at an excitation wavelength.

The composition of the fourth aspect of the invention whereby the solid support comprises a material suitable for calibrating the shift of Raman spectrometers is useful for calibrating the shift and/or the intensity of Raman or photoluminescence spectrometers. The sixth aspect of the invention thus relates to the use of such a composition for calibrating the intensity and/or shift of Raman or photoluminescent spectroscopic measurement instruments operated at an excitation wavelength.

The seventh aspect of the invention relates to a method of calibrating the intensity and/or shift of a Raman or photoluminescent spectroscopic measurement instruments operated at an excitation wavelength comprising the steps of:
- when the method is for calibrating the intensity of a Raman or photoluminescent spectroscopic measurement instruments operated at an excitation wavelength:
   (i) irradiating a composition according to the first or third aspect or a composition according to the fourth aspect at said excitation wavelength; whereby the metal oxide, metal carbonate, or carbonaceous material is in a known amount and relates to an average reference intensity value of the most intense peak assignable to the metal oxide, metal carbonate, or carbonaceous material respectively;
   (ii) measuring the intensity of the most intense peak assignable to the metal oxide, metal carbonate, or carbonaceous material, thus providing a measurement value,
   (iii) comparing the measurement value obtained in (ii) with the average reference intensity value of the most intense peak assignable to the metal oxide, metal carbonate, or carbonaceous material and,
   (iv) adjusting the instrument so that the average reference intensity value of the most intense peak assignable to the metal oxide, metal carbonate, or carbonaceous material and the measurement value are substantially the same; or; alternatively,
- when the method is for calibrating the intensity and/or shift of a Raman or photoluminescent spectroscopic measurement instruments operated at an excitation wavelength:
   (i) irradiating a composition according to the first or third aspect or a composition according to some embodiments of the fourth aspect at said excitation wavelength; whereby the metal oxide, metal carbonate, or carbonaceous material is in a known amount and relates to an average reference intensity value of the most intense peak assignable to the metal oxide, metal carbonate, or carbonaceous material respectively , and whereby the solid support is assigned a reference shift value;
   (ii) measuring the intensity of the most intense peak assignable to metal oxide, metal carbonate, or carbonaceous material thus providing a measurement value of intensity, and measuring the shift of the one or more peaks assignable to the solid support;
   (iii) comparing the measurement values obtained in (ii) with the average reference intensity and shift values of (i) and,
   (iv) adjusting the instrument so that the average reference intensity and shift values of and the measurement values are substantially the same.

The materials and compositions of the invention are useful in harmonizing the measurements carried out by several Raman or photoluminescence spectrometers, on the basis of the calibration of both intensity and shift of Raman scattering. An eighth aspect of the invention thus relates to the use of a material according to the first or third aspect of the invention or of a composition according to the fourth aspect of the invention in harmonizing the results of Raman or photoluminescence spectra made by a plurality of Raman or photoluminescence instruments or in the quantification of the content of the metal oxide, metal carbonate, or carbonaceous material in a sample.

### BRIEF DESCRIPTION OF THE DRAWINGS

Fig. 1 represents the Raman spectrum of the epoxy resin of Example 1 as measured using a BWTek iRaman spectrometer with a 785 nm laser at 290 mW, 3 s integration time and 20X objective.
Fig. 2 represents (A) the distribution of particle size of TiO₂ particles employed in Example 1, (B) the Raman spectrum of the TiO₂ particles of Example 1 as measured with a BWTek Raman spectrometer with a 785 nm laser at 290 mW, 6 s integration time and 20X lens objective, (C) the morphology, as observed by Scanning Electron Microscopy of particles of TiO₂ particles employed in Example 1.
Fig. 3-A shows the average Raman spectrum obtained from the EP+0.5%TiO₂ composite material of Example 1, using the microscope with a 20X objective (N.A. 0.4), 785 nm laser, 290 mW power and 3 s integration time. Figure 3-B shows the maximum intensity of the TiO₂ main peak (1144) for each of the 50 measurements performed.
Fig. 4 shows (a) the mean spectra of three different measurements at different areas of the sample (M1, M2, M3) as measured by Raman Confocal Microscopy of the material of Example 1 (Fig. 4-A a 20X objective lens and FIG. 4-B c 100X objective lens) and an (b) image of the surface analysed with each of the objective lenses 20X and 100X (Fig. 4-A b and FIG. 4-B d, respectively).
Fig. 5 shows the maximum intensity of the TiO₂ main peak (1144) for each of the 50 measurements performed carried out with the sample of Comparative Example 1.
Fig. 6 shows the mean spectra of three different measurements at different areas of the sample (M1, M2, M3) as measured by Raman Confocal Microscopy of the material of Comparative Example 1 (Fig. 6 (a) 20X objective lens and (c) 100X objective lens) and an image of the surface analysed with each of the objective lenses 20X and 100X (Fig. 6 (b) and FIG. 6 (d), respectively).
Fig. 7 represents: (a) the UV-Vis spectrum of the lamp employed in degradation tests of Example 1; (b), (c), (d) and (e) show the parameters L*, a*, b* and the colour variation ΔE respectively, measured at 20 h intervals during exposure to UV light, of said samples.
Fig. 8 shows the Raman spectrum obtained both on the surface of the polystyrene sample (**) and inside the groove (*) machined in the polystyrene support of Example 2.
Fig. 9 shows the Raman spectra of various compositions as prepared in Example 2 having different thickness of groove.
Fig. 10 represents the calibration lines obtained for two different BWTek iRaman devices (1 and 2), at two different wavelengths: (a) and (b) 785 nm and (c) and (d) 532 nm using a probe.
Fig. 11 represents the calibration lines obtained for two different Raman devices models BWTek iRaman and Witec at 532 nm using a microscope and a 20X objective.
Fig. 12 represents plots of the predicted TiO₂ weight percentages versus the measured TiO₂ weight percentages in each Raman spectrum for each model as described in the chemometric measurements of Example 5 (Figure 12-A a) and Figure 12-B c)) and the obtained corresponding Principal Component Analysis (Figure 12-A b) and Figure 12-B d)).
Fig. 13 represents the average Raman spectra obtained for the new reference samples with CeO₂ (Figure 13a) and diamond (Figure 13b) in 200 µm thick grooves on the polystyrene supports, as described in Example 6.
Fig 14 shows the maximum intensity of the CeO₂ main Raman band (I465) for each of the 50 measurements performed.
Fig. 15 represents the maximum Raman intensity of Eu₂O₃ (I₂₄₃₃) obtained from the average Raman spectra of each composition.
Fig 16 the maximum intensity of the Eu₂O₃ main Raman band (I₂₄₃₃) for each of the 50 measurements performed for the a) 0.5% and b) 2.5% samples.
Fig 17 shows the average Raman spectra with the objective of 20x obtained with a Witec Raman spectrometer with a 532 nm laser at 0.5 mW, integration time of 0.2 s of (a) EP+0.5%Eu₂O₃ and (b) EP+2.5%Eu₂O3 and Raman surface images of epoxy (black zone) and Eu₂O₃ (white zone) of (c) EP+0.5%Eu₂O₃ and (d) EP+2.5%Eu₂O₃.
Fig. 18 represents (the maximum luminescence intensity of the Eu₂O₃ main luminescence band (I₆₁₁) obtained from the luminiscence spectra of each composition.
Fig. 19 represents the average Raman spectrum of a composite material comprising luminescent Eu₂O₃ particles inserted within the groove of a polystyrene support, as describe din Example 7.
Fig. 20 represents the scheme of the experimental test performed to obtain the EP+Eu₂O₃ luminance.
Fig 21 shows the luminance (cd/m²) of all EP+ Eu₂O₃ samples using a 405 nm laser.

### DETAILED DESCRIPTION OF THE INVENTION

All terms as used herein in this application, unless otherwise stated, shall be understood in their ordinary meaning as known in the art. Other more specific definitions for certain terms as used in the present application are as set forth below and are intended to apply uniformly throughout the specification and claims unless an otherwise expressly set out definition provides a broader definition.

For the purposes of the invention, any ranges given include both the lower and the upper end-points of the range. Ranges given, such as temperatures, times, molar ratio, volume ratio and the like, should be considered approximate (i.e. with a 5% margin of variation around indicated point), unless specifically stated.

In the context of the invention, the term "calibrating" and its derivatives refers to the action of correlating the readings of a Raman or photoluminescence spectroscopic instrument measured for a reference sample with a known reference value. In the context of Raman and photoluminescence spectroscopy, both the intensity of the signal (the height of the peak) and the shift of the signal (wavelength of the peak) may be calibrated.

In the context of the invention, the term "substantially transparent", when referring to a material and in relation to a certain wavelength, refers to the fact that the absorption of said material of light having said wavelength is so low that it substantially does not affect the recording of a Raman or photoluminescence spectrum using said wavelength as excitation wavelength.

In the context of the invention, the term "particle size" refers to the longest dimension of a particle, expressed as the median value of the particle sizes within a statistical population of particles. In the specific case of an essentially spherical particle, particle size refers to the particle diameter. In the specific case of an essentially polyhedral particle shape, particle size refers to the longest dimension of all dimensions of that shape. Particle size can be measured using techniques known in the art, such as the use of dynamic light scattering (DLS) technique or microscopy.

In the context of the invention, the term "superficial roughness" also referred to as Sa refers to the mean of the absolute values of the surface departure above and below the mean plane within the sampling area of a sample surface. Methods for measuring this parameter are known in the art and include using an optical profilometer or roughnessmeter as those known in the art.

In the context of the invention, the term "homogeneous distribution" when related to the distribution of particles within the thermoset polymer matrix, refers to the fact that the particles are distributed evenly throughout the whole material without any substantial clustering or aggregation in certain regions of the composite material. In an embodiment, the particles of the material for calibrating the intensity of Raman or photoluminescent spectroscopic measurement instruments operated at an excitation wavelength, are homogeneously dispersed in the matrix such that the standard deviation over 50 measurements of the intensity of the most intense peak assignable to the metal oxide or the carbonaceous material of the Raman response of said material at said excitation wavelength is lower than 5.5%; said measurements being carried out at different areas of between 9 and 110 µm of diameter of a sample of said material; preferably the areas have a diameter of about 10 or about 100 micrometres. In a particular embodiment, the standard deviation over 50 measurements of the intensity of the most intense peak assignable to the metal oxide or the carbonaceous material of the Raman response of said material at said excitation wavelength is lower than 5%; preferably lower than 4%, more preferably lower than 3%.

In the context of the invention, the term "Raman cross-section" relates to a measure of the efficiency with which a material scatters light in the Raman scattering process. It represents the probability per unit volume that a photon of incoming light will be scattered into a photon with a different frequency.

In the context of the invention, the term "substantially uniform thickness" refers to a material having the same thickness over the part of the material employed for calibrating spectroscopic instruments, said thickness having the tolerance of the method employed to produce this material, said method being for instance injection moulding followed by optional steps of polishing.

In the context of the invention, the term "substantially", when referring to an identical response or measurement of a Raman signal preferably refers to the fact to the peaks obtained by said compared measurements do not vary in terms of shift and intensity in an amount higher than 5.5%; preferably in an amount lower than 3%.

In the context of the invention, the term "substantially flat", when referring to a surface refers to a surface whereby the flatness of said surface admits deviations within the tolerance of the methods to produce said surface and/or to measure said flatness of said surface. In the present invention, said method comprises polishing.

According to the first aspect of the invention, the invention relates to a material for calibrating the intensity of Raman or photoluminescent spectroscopic measurement instruments operated at an excitation wavelength, said material having a substantially uniform thickness, comprising:
- a thermoset polymer matrix that is substantially transparent at said excitation wavelength; and
- particles of a metal oxide, metal carbonate, carbonaceous material or a mixture thereof dispersed in said thermoset polymer matrix;
characterized
- in that the Raman cross-section at said excitation wavelength of said metal oxide, metal carbonate or carbonaceous material is higher than the Raman cross-section of the thermoset polymer matrix at said excitation wavelength; and
- in that the particles are homogeneously dispersed in the matrix such that the standard deviation over 50 measurements of the intensity of the most intense peak assignable to the metal oxide, metal carbonate or carbonaceous material of the Raman response of said material at said excitation wavelength is lower than 5.5%;
with the proviso that when the material is for calibrating a photoluminescent spectroscopic measurement instrument, the material of the particles is photoluminescent at said excitation wavelength.

In particular embodiments of the first aspect of the invention, the material has a thickness at any point of the material that deviates less than 5% from the average value of the thickness of the material; preferably less than 4%; more preferably less than 2%; even more preferably, less than 1%. As the intensity of the Raman signal is affected by the thickness of the sample, it is preferred that the thickness of the sample is uniform over the whole material.

In the context of the invention, the expression "thermoset polymer matrix" and its derivatives refers to a thermosetting polymeric matrix wherein the polymer, called a thermoset polymer, is a polymer that is obtained by irreversibly curing a prepolymer such as a resin as known in the art. Curing comprises crosslinking or chain extension through the formation of covalent bonds between individual chains of the prepolymer and may be induced by heat or suitable radiation or may be promoted by high pressure, or mixing with a catalyst as known in the art.

In further particular embodiment of the first aspect of the invention, the thermoset polymer matrix is selected from the group consisting of epoxy resins, polyesters, vinyl esters, phenolic resins, silicon rubbers, polyurethane, bakelite, melamine resins, vulcanized rubber, benzoxazine resin, polyimides, or mixtures thereof; preferably the thermoset polymer matrix is selected from the group consisting of epoxy resins, polyesters, vinyl esters, phenolic resins, silicon rubbers, polyurethane, Bakelite or mixtures thereof; more preferably is an epoxy resin.

Preferred thermoset polymer matrices are those that can be prepared by curing of a liquid precursor mixture. Such thermoset polymer matrices include, among others, epoxy resins, which can be prepared by reaction of ring opening of epoxides with alcohols and/or amines.

In further particular embodiments of the first aspect of the invention, the thermoset polymer matrix consists of an epoxy resin; preferably an epoxy resin with a number average molecular weight below 1500; preferably below 1000; more preferably equal or below 700); more preferably wherein the epoxy resin is a bisphenol-A- epoxy resin and an epoxy derivative. The number average molecular weight of the epoxy resin is measured by methods known in the art.

In a particular embodiment, the particles are of metal oxide, metal carbonate or carbonaceous material.

In further particular embodiments of the first aspect of the invention, the particles are particles of metal oxide. As will be apparent to the skilled person, any metal oxide that is known in the art for having a characteristic peak in its Raman spectrum and for being stable at normal conditions (20 °C and 1 atm) is suitable. Said metal of the metal oxide particles is preferably selected from the group consisting of titanium, calcium, barium, strontium, zinc, magnesium, niobium, tantalum, zirconium, chromium, molybdenum, tungsten, aluminium, gallium, silicon, germanium, tin, antimony, cerium, europium or mixtures thereof. In preferred embodiments, the metal of the metal oxide is selected from the group consisting of titanium, barium, cerium, europium or mixtures thereof. Preferably, said metal is titanium. More preferably, said titanium oxide comprises or consists essentially of an anatase phase.

In a particular embodiment, the particles of a metal oxide of the material of the first aspect of the invention, are a mixture of particles of different metal oxides such as a mixture of TiO₂ and CeO₂ particles.

In a particular embodiment, the particles are of a metal carbonate; preferably, the metal carbonate is selected from the group consisting of magnesium carbonate, calcium carbonate or mixtures thereof; more preferably, the metal carbonate is calcium carbonate.

In further particular embodiments of the first aspect of the invention, the particles are particles of a carbonaceous material. As will be apparent to the skilled person, any carbonaceous material that is known in the art for having a characteristic peak in its Raman spectrum is suitable. Such carbonaceous materials, include, but are not limited to graphene, carbon nanotubes, fullerene, carbon black, diamond and amorphous carbon. In preferred embodiments, the carbonaceous material is diamond.

In further particular embodiments of the first aspect of the invention, the particles are such that the metal oxide is selected from the group consisting of titanium dioxide, cerium oxide and rare earth oxides; the metal carbonate is selected from the group consisting of magnesium carbonate, calcium carbonate or mixtures thereof, and the carbonaceous material is diamond.

Thus, in more particular embodiments, the material of the first aspect of the invention is one wherein the polymer matrix consists of an epoxy resin and the particles are particles of metal oxide, said metal being selected from the group consisting of titanium, cerium and europium; the particles are particles of calcium carbonate, or, alternatively, the particles are particles of a carbonaceous material that is diamond.

In further particular embodiments, the material of the first aspect of the invention consists essentially of the thermoset polymer matrix as defined in any of the embodiments above and particles of a metal oxide, metal carbonate or a carbonaceous material as defined in any of the embodiments above. Preferably, the material of the first aspect of the invention consists of the thermoset polymer matrix as defined in any of the embodiments above and particles of a metal oxide, metal carbonate or a carbonaceous material as defined in any of the embodiments above.

In further particular embodiments, the material of the first aspect of the invention is one wherein the metal oxide, the metal carbonate or the carbonaceous material is in an amount of from 0.01% to 15% by weight, preferably from 0.1% to 10% by weight; more preferably from 0.1% to 7% and even more preferably from 0.1% to 2%.

In particular, when the metal oxide is titanium dioxide, it is preferred that titanium oxide is present in an amount of from 0.05% to 0.5% in weight of titanium dioxide, even more preferably from 0.1% to 2% by weight.

In particular, when the metal oxide is cerium oxide, it is preferred that cerium oxide is present in an amount of from 0.05% to 5% in weight of cerium dioxide, even more preferably from 1% to 2% in weight; and even more preferably of about 2% in weight.

In particular, when the carbonaceous material is diamond, it is preferred that diamond is present in an amount of from 2% to 15% in weight of diamond, more preferably of from 5% to 10% in weight and even more preferably of about 7% in weight.

In further particular embodiments, the material of the first aspect of the invention is as defined in any of the embodiments above and the particles are dispersed in a substantially homogeneous manner over the whole polymer matrix.

In further particular embodiments, the material of the first aspect of the invention is as defined in any of the embodiments above and has a thickness of between 100 micrometres and 3 mm.

In certain embodiments, the material of the first aspect of the invention is as defined in any of the embodiments above and has a thickness of between 1 and 3 mm, preferably of about 2 mm.

In certain embodiments, the material of the first aspect of the invention is as defined in any of the embodiments above and has a thickness of between 100 micrometres and 500 micrometres, preferably of between 100 micrometres and 400 micrometres. This is particularly the case when the material of the first aspect of the invention is comprised in a composition suitable for the calibration of both Raman intensity and shift as defined in certain embodiments of the fourth aspect of the invention. Such thickness of the sample advantageously allows distinguishing both signals of the particles and of the solid support.

In further particular embodiments, the material of the first aspect of the invention is one wherein the particles have an average particle size of between 10 nm and 3 micrometres; preferably of between 50 nm and 2.5 micrometres; even more preferably of between 100 nm and 2 micrometres.

In particular, when the metal oxide is titanium dioxide, it is preferred that the average particle size is between 100 nm and 500 nm; more preferably of about 350 nm.

In particular, when the metal oxide is cerium oxide, it is preferred that the average particle size is between 800 nm and 1.3 micrometres; more preferably of about 1.1 micrometres.

In particular, when the metal oxide is europium oxide, it is preferred that the average particle size is between 0.3 micrometres and 2 micrometres; more preferably of about 0.6 micrometres.

In particular, when the particles are of a carbonaceous material such as diamond, it is preferred that the particles have an average particle size of between 1 and 2 micrometres.

In particular, when the particles are of a metal carbonate material such as calcium carbonate, it is preferred that the particles have an average particle size of between 1 and 2 micrometres.

In further particular embodiments, the material of the first aspect of the invention is one as defined in any of the embodiments above having an average superficial roughness of below 1 micrometres, preferably of below 0.8 micrometres. Methods for measuring the roughness of a surface are known in the art and will become apparent to the skilled person. A suitable method for measuring said parameter comprises measuring the roughness of a surface with an optical profilometer or roughness meter known in the art.

As defined above, a method for the preparation of a material according to the first aspect also forms part of the invention and constitutes the second aspect of the present invention.

Said method comprises the following steps:
(i) providing a curable liquid precursor mixture of the thermoset polymer matrix;
(ii) providing substantially dry particles of metal oxide, metal carbonate, or carbonaceous material;
(iii) submitting a mixture of the liquid mixture of step (i) with the particles of metal oxide, metal carbonate, or carbonaceous material to a mixing step with a shear force equivalent to the shear force produced by a stirring of at least 10000 rpm;
(iv) milling the product of step (iii);
(v) curing the mixture resulting from step (iv) so as to produce the thermoset polymer. In further particular embodiments, the precursor mixture of the thermoset polymer matrix is such that, when the thermoset polymer matrix is an epoxy resin, said precursor mixture comprises epoxy compounds and a catalyst. Said catalyst may be a compound comprising one or more amine and/or hydroxyl groups susceptible of reacting with an epoxide group.

In further particular embodiments, the precursor mixture of the thermoset polymer matrix is such that, when the thermoset polymer matrix is a polyester, said precursor mixture comprises unsaturated carboxylic acids and glycols.

In further particular embodiments, the precursor mixture of the thermoset polymer matrix is such that, when the thermoset polymer matrix is a vinyl ester, said precursor mixture comprises an epoxy resin and acrylic or methacrylic acids.

In further particular embodiments, the precursor mixture of the thermoset polymer matrix is such that, when the thermoset polymer matrix is a phenolic resin, said precursor mixture comprises one or more phenols and formaldehyde.

In further particular embodiments, the precursor mixture of the thermoset polymer matrix is such that, when the thermoset polymer matrix is a silicon rubber, said precursor mixture comprises polydimethylsiloxane.

In further particular embodiments, the precursor mixture of the thermoset polymer matrix is such that, when the thermoset polymer matrix is a polyurethane, said precursor mixture comprises one or more isocyanates and one or more alcohols.

In further particular embodiments, the precursor mixture of the thermoset polymer matrix is such that, when the thermoset polymer matrix is a bakelite, said precursor mixture comprises a phenol and a formaldehyde.

In further particular embodiments, the precursor mixture of the thermoset polymer matrix is such that, when the thermoset polymer matrix is a melamine resin, said precursor mixture comprises formaldehyde and melamine.

In further particular embodiments, the precursor mixture of the thermoset polymer matrix is such that, when the thermoset polymer matrix is a vulcanized rubber, said precursor mixture comprises a vulcanizing agent and a rubber polymeric precursor such as polyisoprene (natural rubber) or styrene-butadiene rubber.

In further particular embodiments, the precursor mixture of the thermoset polymer matrix is such that, when the thermoset polymer matrix is a benzoxazine resin, said precursor mixture comprises phenols, amines, and formaldehyde.

In further particular embodiments, the precursor mixture of the thermoset polymer matrix is such that, when the thermoset polymer matrix is a polyimide, said precursor mixture comprises a dianhydride and a diamine or a diisocyanate.

In further particular embodiments, the particles of the metal oxide or the carbonaceous material provided in step (ii) of the method of the second aspect of the invention are as defined in any of the preferred and particular embodiments defined above for the first aspect of the invention; in particular, their composition and particle size.

In further particular embodiments, the particles of the metal oxide, metal carbonate, or carbonaceous material provided in step (ii) of the method of the second aspect of the invention have less than 0.1% water in weight. This is advantageous as it favours the dispersion of the particles in the matrix by preventing particle agglomeration by interactions of the water molecules adsorbed on the surface of the particle.

In further particular embodiments, step (iii) of the method of the second aspect of the invention comprises submitting a mixture of the liquid mixture of step (i) with the particles of metal oxide, metal carbonate, or carbonaceous material to a mixing step with a shear force equivalent to the shear force produced by a stirring of at least 15000 rpm; preferably of about 18000 rpm. It is further preferred that this step is carried out at a temperature at which the curing of the liquid precursor mixture does not start.

In further particular embodiments, step (iv) of the method of the second aspect of the invention comprises milling the product of step (iv) through a three-roll mill; said rolls being separated from each other from a distance of no more than 0.5 mm.

The combination of steps (iii) and (iv) advantageously provides a homogeneous dispersion of the particles of the metal oxide, metal carbonate, or carbonaceous material over the whole polymer matrix.

Step (v) of the method of the invention is carried out in conditions allowing for the curing of the precursor mixture provided in step (i). Such conditions are known in the art and will become apparent to the skilled person upon reduction of the invention to practice. Those involve, among other, heating and/or irradiation with UV-Vis light. In particular, when the thermoset polymer matrix is an epoxy resin, the curing step (v) is carried out preferably by heating; more preferably, the mixture is heated at a temperature of between 30 and 100°C for a period of time of between 5 and 80 h; preferably at 40 °C for a period of 48 h.

Prior to the curing step, the liquid mixture resulting from step (iv) may be poured in some moulds or other shaping means, so as to provide a shape to the material of the first or third aspect of the invention.

The method of the second aspect of the invention further comprises in preferred embodiments a step of polishing the surface of the material produced in step (v). The purpose of this step is to provide a material having an average superficial roughness of below 1 micrometres, preferably of below 0.8 micrometres. Means and methods for polishing thermoset polymer materials are known in the art and will become apparent to the skilled person upon reduction of the invention to practice. Those include, for instance, submitting the product of step (v) to sanding steps with mesh size from #1000 to #4000, polishing with nylon cloth comprising a polycrystalline diamond of particle size 1 micrometres and combinations of said sanding and polishing steps.

The method of the second aspect of the invention produces a material suitable for Raman intensity calibration.

As mentioned above, a third aspect of the invention relates to a product obtainable by the method of the second aspect of the invention. The product of the third aspect preferably relates to the product obtainable by the method as defined in any of the particular and preferred embodiments defined above for the third aspect of the invention.

The material of the first and third aspect may further be inserted in one or more grooves formed in a solid support. As mentioned above, the fourth aspect of the invention relates to a composition comprising one or more materials as defined the first or third aspect of the invention and a solid support, each material being arranged in a groove formed within said solid support, thus providing a substantially flat surface.

When said solid support comprises more than one materials as defined in the first aspect of the invention such that each material is arranged in a groove formed within said solid support, it is contemplated in some embodiments that each material comprises the same particles in different amounts. This advantageously allows calibrating the intensity at different known amounts of particles and establishing calibration lines for chemometric measurements. This can be achieved by measuring and correlating the intensity of the Raman signal corresponding to each composite material with the amount of particles in said material.

When said solid support comprises more than one materials as defined in the first aspect of the invention such that each material is arranged in a groove formed within said solid support, it is contemplated in some embodiments that each material comprises different types of particles. This allows calibrating the intensity of a Raman spectrometer at different Raman shift values with one sole sample.

In a particular embodiment of the fourth aspect of the invention, each groove in said solid support has a substantially uniform thickness. Preferably, the thickness or depth of each groove does not deviate more than 2% of the average value of the thickness or depth of said groove at each point of the groove.

In a particular embodiment of the fourth aspect of the invention, said solid support is made of a material suitable for calibrating the shift of Raman signals, such as polystyrene. Polystyrene is particularly advantageous as it is readily available, easy to prepare and to handle and presents a characteristic Raman signal at 1001 cm⁻¹, in particular when an excitation wavelength of 785 nm or 532 nm is used.

Thus, in particular embodiments, said solid support has a superficial average roughness of below 1.0 micrometres, preferably of below 0.8 micrometres, more preferably of below 0.7 micrometres.

In further particular embodiments, the inner part of each groove of said solid support has a superficial average roughness of below 1.0 micrometres, preferably of below 0.8 micrometres.

In further particular embodiments, each groove has a thickness of between 0.05 and 0.5 mm, preferably of between 0.1 and 0.5 mm; and more preferably of between 0.2 and 0.4 mm. As further detailed in the Examples, the thicker the groove, the weaker the Raman signal of the solid support.

The grooves formed within the solid support of the fourth aspect of the invention may have any width, provided that such width is sufficiently high to allow the measurement of the Raman or photoluminescent spectra of the material comprised in said groove. In particular embodiments, each groove formed within the solid support has a width comprised from 1 to 10 mm; preferably from 2 to 5 mm and more preferably of about 4 mm.

The grooves formed within the solid support of the fourth aspect of the invention may have any length, provided that such length is sufficiently high to allow the measurement of the Raman or photoluminescent spectra of the material comprised in said groove. In particular embodiments, each groove formed within the solid support has a length comprised from 10 to 50 mm; preferably from 10 to 30 mm and more preferably of about 20 mm.

A method for the preparation of a composition according to the fourth aspect of the invention also form part of the invention.

Said method comprises the steps of:
(i) providing a curable liquid precursor mixture of the thermoset polymer matrix;
(ii) providing substantially dry particles of metal oxide, metal carbonate, or carbonaceous material;
(iii) submitting a mixture of the liquid mixture of step (i) with the particles of metal oxide, metal carbonate, or carbonaceous material to a mixing step with a shear force equivalent to the shear force produced by a stirring of at least 10000 rpm;
(iv) milling the product of step (iii);
(v) providing a solid support;
(vi) providing at least one groove in the solid support of step (v);
(vii) inserting a mixture resulting from step (iii) or (iv) in the at least one groove provided in step (vi);
(viii) curing the precursor mixture in the composition provided in step (vii) so as to produce the thermoset polymer.

Step (vi) may be carried out using a milling machine. Steps (i)-(iv) and (viii) may be carried out as described above in any particular embodiments of the second aspect of the invention.

Said method may further comprise the step of removing excess composite material so as to provide a substantially even surface between said solid support and said composite material. A milling machine may be used to this end.

The method for the preparation of the composition of the fourth aspect of the invention further comprises in preferred embodiments a step of polishing the surface of the material produced in step (v). The purpose of this step is to provide a material having an average superficial roughness of below 1 micrometres, preferably of below 0.8 micrometres. Means and methods for polishing polymer materials are known in the art and will become apparent to the skilled person upon reduction of the invention to practice. Those include, for instance, submitting the product of step (v) to polishing with nylon cloth comprising a polycrystalline diamond of particle size 1 micrometres.

The method described above may be adapted and some steps may be repeated a plurality of times in order to prepare a composition comprising a plurality of grooves filled with a material as defined in the first or third aspect of the invention.

As mentioned above, the material of the first or third aspect of the invention and the composition of the fourth aspect of the invention are useful for the calibration of the intensity of Raman or photoluminescent spectroscopic measurement

The fifth aspect of the invention thus relates to the use of a material as defined in the first aspect of the invention or of a composition as defined in the fourth aspect of the invention for calibrating the intensity of Raman or photoluminescent spectroscopic measurement instruments operated at an excitation wavelength.

In addition, the composition of the fourth aspect of the invention whereby the solid support comprises a material suitable for calibrating the shift of Raman spectrometers, such as polystyrene, is useful for calibrating the shift and/or the intensity of Raman or photoluminescence spectrometers. The sixth aspect of the invention thus relates to the use of such a composition for calibrating the intensity and/or shift of Raman or photoluminescent spectroscopic measurement instruments operated at an excitation wavelength.

The seventh aspect of the invention relates to a method of calibrating the intensity and/or shift of a Raman or photoluminescent spectroscopic measurement instruments operated at an excitation wavelength comprising the steps of:
- when the method is for calibrating the intensity of a Raman or photoluminescent spectroscopic measurement instruments operated at an excitation wavelength:
   (i) irradiating a composition according to the first or third aspect or a composition according to the fourth aspect at said excitation wavelength; whereby metal oxide, metal carbonate, or carbonaceous material is in a known amount and relates to an average reference intensity value of the most intense peak assignable to the metal oxide, metal carbonate, or carbonaceous material;
   (ii) measuring the intensity of the most intense peak assignable to the metal oxide, metal carbonate, or carbonaceous material, thus providing a measurement value,
   (iii) comparing the measurement value obtained in (ii) with the average reference intensity value of the most intense peak assignable to the metal oxide, metal carbonate, or carbonaceous material and,
   (iv) adjusting the instrument so that the average reference intensity value of the most intense peak assignable to the metal oxide, metal carbonate, or carbonaceous material and the measurement value are substantially the same; or; alternatively,
- when the method is for calibrating the intensity and/or shift of a Raman or photoluminescent spectroscopic measurement instruments operated at an excitation wavelength:
   (i) irradiating a composition according to the first or third aspect or a composition according to some embodiments of the fourth aspect at said excitation wavelength; whereby the metal oxide, metal carbonate, or carbonaceous material is in a known amount and relates to an average reference intensity value of the most intense peak assignable to the metal oxide, metal carbonate, or carbonaceous material , and whereby the solid support is assigned a reference shift value;
   (ii) measuring the intensity of the most intense peak assignable to the metal oxide, metal carbonate, or carbonaceous material, thus providing a measurement value of intensity, and measuring the shift of the one or more peaks assignable to the solid support;
   (iii) comparing the measurement values obtained in (ii) with the average reference intensity and shift values of (i) and,
   (iv) adjusting the instrument so that the average reference intensity and shift values of and the measurement values are substantially the same.

In a particular embodiment, the method of calibrating the intensity and/or shift of a Raman or photoluminescent spectroscopic measurement instruments operated at an excitation wavelength further comprises collecting spectra and correcting the relative intensity of the Raman or photoluminescent spectroscopic measurement spectra; preferably with a lamp; more preferably with a Light Emitting Diode lamp. The step of correcting the relative intensity of the Raman or photoluminescent spectroscopic measurement spectra may be performed by any method known in the art.

In a more particular embodiment, the step of correcting the relative intensity of the Raman or photoluminescent spectroscopic measurement spectra of the method of calibrating the intensity and/or shift of a Raman or photoluminescent spectroscopic measurement instruments operated at an excitation wavelength is performed before or during any of steps (i) to (iv).

In a more particular embodiment, the step of correcting the relative intensity of the method of calibrating the intensity and/or shift of a Raman or photoluminescent spectroscopic measurement instruments operated at an excitation wavelength is performed: (i) when the method is for calibrating the intensity of a Raman or photoluminescent spectroscopic measurement instruments operated at an excitation wavelength; and/or (ii) when the method is for calibrating the intensity and/or shift of a Raman or photoluminescent spectroscopic measurement instruments operated at an excitation wavelength.

When the particles consist of titanium dioxide, the Raman peak at 144 cm⁻¹ may be used as most intense peak assignable to titanium dioxide. When the particles consist of cerium oxide, the Raman peak at 465 cm⁻¹ may be used as most intense peak assignable to cerium oxide. When the particles consist of europium oxide, the luminescence peak at 611 nm or the Raman peak at 2433 cm⁻¹ may be used as most intense peak assignable to europium oxide. When the particles consist of diamond, the Raman peak at 1332 cm⁻¹ may be used as most intense peak assignable to diamond. When the particles consist of calcium carbonate, the Raman peak at 1085 cm⁻¹ may be used as most intense peak assignable to calcium carbonate. Additionally, when the solid support consists of polystyrene, the Raman peak at 1001 cm⁻¹ may be used as reference shift value.

The materials and compositions of the invention are useful in harmonizing the measurements carried out by several Raman or photoluminescence spectrometers, based on the calibration of both intensity and shift of Raman scattering .An eighth aspect of the invention thus relates to the use of a material according to the first or third aspect of the invention or of a composition according to the fourth aspect of the invention in harmonizing the results of Raman or photoluminescence spectra made by a plurality of Raman or photoluminescence instruments or in the quantification of the content of the metal oxide, metal carbonate or the carbonaceous material in a sample. The particular embodiments of the seventh and eighth aspects likewise apply to the ninth aspect of the invention.

Throughout the description and claims the word "comprises" and variations of the word, are not intended to exclude other technical features, additives, components or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### EXAMPLES

### Example 1: Preparation of an epoxy composite material incorporating 0.5% wt of titanium dioxide for Raman intensity calibration

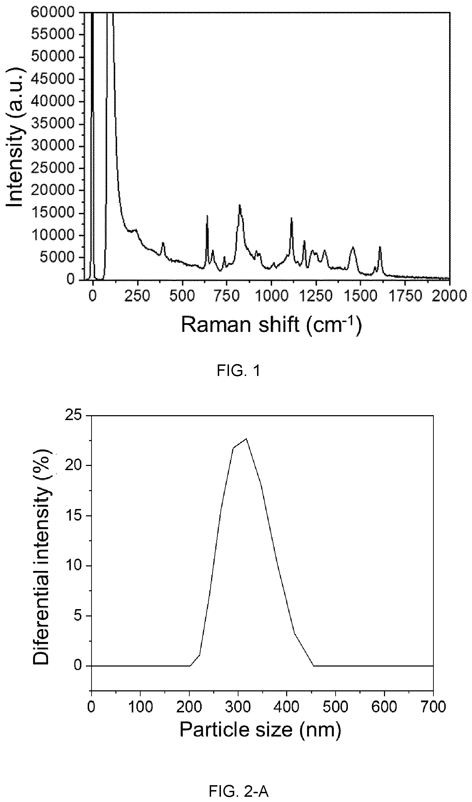

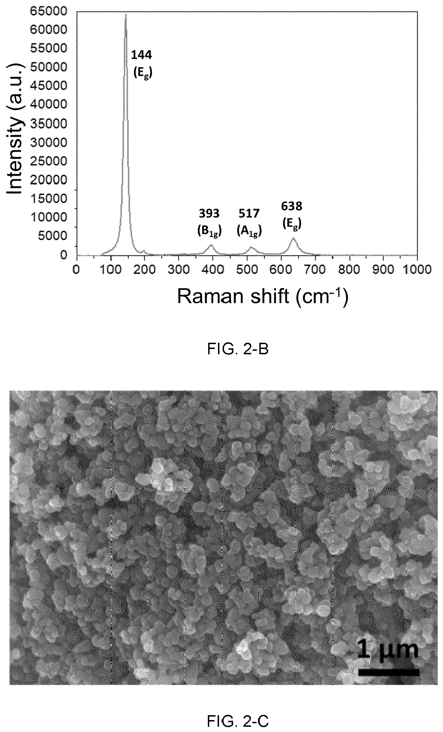

The EP+0.5%TiO₂ composite material was fabricated with a transparent epoxy resin in liquid state EP, composed of bisphenol-A- (epichlorhydrin) epoxy resin (number average molecular weight ≤ 700) and an epoxy derivative, with UV filter TRANSLUX D 150 (Feroca, Madrid), with a resin:catalyst ratio of 2:1 by mass . The resin used has a density at 25 °C of 1.10-1.14 g/cm⁻³, while the density of the catalyst is 0.96-1.00 g/cm⁻³. The Raman spectrum of the epoxy resin as measured using a BWTek iRaman spectrometer with a 785 nm laser at 290 mW, 3 s integration time and 20X objective is shown in Figure 1. The employed TiO₂ (Fábrica Nacional de Moneda y Timbre, Burgos) was a powdery material with 99 % anatase phase and an average particle size of 312±62 nm. Figure 2 shows the characterisation of these particles: their particle size was obtained by dynamic light scattering (DLS) technique (Fig. 2-A), their Raman spectrum (Fig. 2-B, measured with a BWTek iRaman spectrometer with a 785 nm laser at 290 mW, 6 s integration time and 20X objective) and their morphology analysed by Scanning Electron Microscopy (Fig. 2-C).

### General procedure 1 for the dispersion of particles in epoxy matrix:

The general procedure 1 consists of the following process steps:
(a) The TiO₂ particles were pre-dried prior to the mixing process in a Dry-Big drying oven, J.P. SELECTA for 24 h at 80 °C to remove possible moisture contained in the particles.
(b) 40 g of the resin and 20 g of catalyst were weighed into a 100 mL plastic beaker. A dry weight percentage (0.5 %) of TiO₂ obtained in step (a) (0.3 g) was weighed in a separate vessel on a Precisa XB 220A precision balance.
(c) The 60 g of the two parts of the liquid epoxy resin (40 g resin + 20 g catalyst) obtained in (b) were stirred in a Lleal Dissolver SL-1 high speed stirrer using a 3 cm diameter stainless steel disc at a speed of 800 rpm for 30 s. Subsequently, the TiO₂ particles weighed in (b) were added while the resin continued to mix in the stirrer. Once the TiO₂ particles were added, the EP+0.5%TiO₂ composite was stirred for 2 min at 2700 rpm.
(d) In a subsequent step, the previously obtained EP+0.5%TiO₂ composite material precursor mixture was mixed in a high shear Ika Ultra turrax^{®} digital T 25 at 18000 rpm for 2 min. To avoid unwanted heating of the resin and its pre-curing by the temperature, a 1 min stop was carried out in the middle of the process.
(e) The homogenisation of the sample resulting from step (d) was completed in a further mixing step, on an Exakt 50l tri-cylinder roller, where the composite was processed twice through the three rollers spaced 0.5 mm apart.
(f) The EP+0.5%TiO₂ composite material obtained in liquid state after step (e) was cast into three 30 mm diameter SamplKup^{™} cylindrical moulds of the Buehler brand. Subsequently, the material obtained in the moulds was subjected to a curing process at 40 °C for 48 h in a Dycometal Afa 288 forced air circulation oven for the crosslinking or polymerisation of the epoxy resin with the catalyst, thus producing the reference composite material for the Raman intensity calibration.
(g) Once the polymerisation process was completed, the EP+0.5%TiO₂ composites were demoulded and polished in order to obtain optically polished surfaces to obtain a correct Raman signal. For this purpose, a Buehler Motopol 12 Metaserv automatic polisher was used with the following process: polishing for 4 min on #1000 grit, 4 min on #2500 grit, 4 min on #4000 grit and polishing on nylon cloth with Neurtek polycrystalline diamond 1 µm and Neurtek water-based lubricant for 4 min. The polishing weight used on each EP+0.5%TiO₂ sample was 8 N and a constant speed of 150 rpm.
(h) The polished materials were cut to thicknesses of approximately 2 mm on a Buehler IsoMet^{™} Low Speed Saw with a diamond cut-off wheel from Qatm (Germany) for further characterisation.

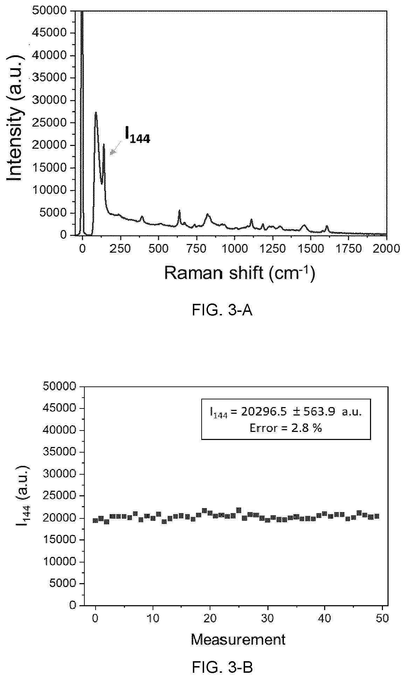

In order to determine the Raman response of the resulting material EP+0.5%TiO₂, 50 measurements were carried out in different areas of the fabricated sample material. For this purpose, a BWTek iRaman portable Raman spectrometer equipped with two different excitation lasers of 532 nm and 785 nm was used. Figure 3-A shows the average Raman spectrum obtained from the EP+0.5%TiO₂ composite material, using the microscope with a 20X objective (N.A. 0.4), 785 nm laser, 290 mW power and 3 s integration time. The Raman bands of the epoxy resin are observed as well as the main TiO₂ band at 144 cm⁻¹.

In addition, Raman spectroscopy also verifies the dispersion and homogeneity of the TiO₂ particles in the epoxy resin. Figure 3-B shows the maximum intensity of the TiO₂ main peak ((144 cm⁻¹) for each of the 50 measurements performed. Thus, the homogeneity of the sample can be confirmed, where an average of 20296.5 a.u. and a standard deviation of 563.9 a.u. have been obtained for these measurement conditions. The error of the measurement deviation is thus 2.8%.

The resulting composite sample was also characterised with a Witec Alpha 300RA Confocal Raman Microscope (Ulm, Germany) using a 532 nm excitation laser with a fibre collection of 50 µm diameter and a power of 1.8 mW. The material was characterised with two different objective lenses, 20X (A.N. 0.4) and 100X (A.N. 0.95) and three measurements were performed on three different areas of the sample (M1, M2 and M3) with each objective. The scanning area for the Raman image was 100x100 µm and 100 ×100 pixels for each map. The integration time used per spectrum was 0.2 s. The collected Raman spectra were analysed using the Witec Control Plus software (Ulm, Germany). For the treatment of the results obtained by Confocal Raman microscopy, "cosmic ray removal" (CRR) and "background subtraction" (BSub) were performed.

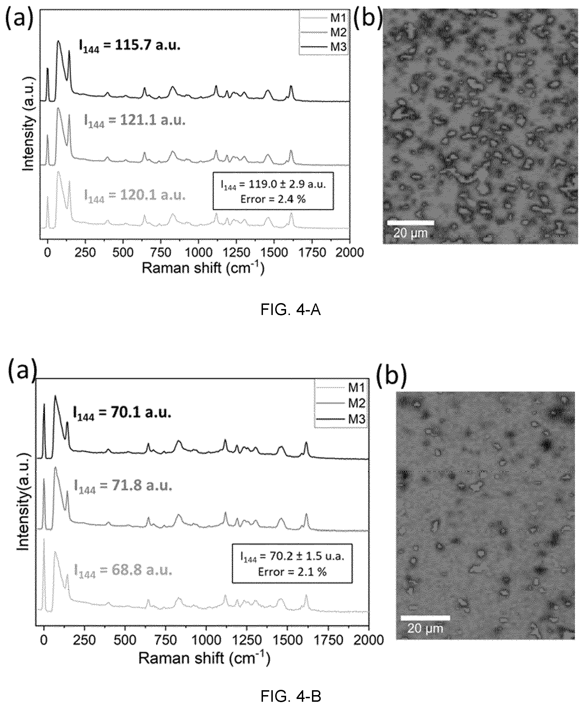

Figure 4 shows the mean spectra of three different measurements of each of the two employed objectives (Fig. 4-A a 20X and FIG. 4-B c 100X) and an image of the surface analysed with each of the objective lenses 20X and 100X (Fig. 4-A b and FIG.4-B d, respectively). The calculation of the maximum intensity of the main peak of TiO₂ (I144) for each of the two objective lenses employed can also be observed. The results show again a great homogeneity of the EP+0.5%TiO₂ samples manufactured according to General Procedure 1, as the average intensity is similar in each of the maps made for each of the measured objectives. Measurement deviation errors of no more than 2.4% have been obtained in both cases. In the images of the surface of the EP+0.5%TiO₂ material (Figure 4-A b and Fig. 4-B d), it can be seen how the TiO₂ particles (white zone), both individually and in small agglomerates, are homogeneously distributed in the epoxy matrix (grey zone), giving in any case similar average Raman spectra. Data related to Fig. 4-A were obtained with a Witec Raman spectrometer with a 532 nm laser at 1.8 mW, integration time 0.2 s, with 20X objective. Data related to Fig. 4-B were obtained with a Witec Raman spectrometer with a 532 nm laser at 1.8 mW, integration time 0.2 s, with 100X objective.

The durability of the prepared reference material for Raman intensity calibration was tested by two accelerated tests. Both the ultraviolet degradation and the humidity resistance of the reference sample made of EP+0.5%TiO₂ were studied.

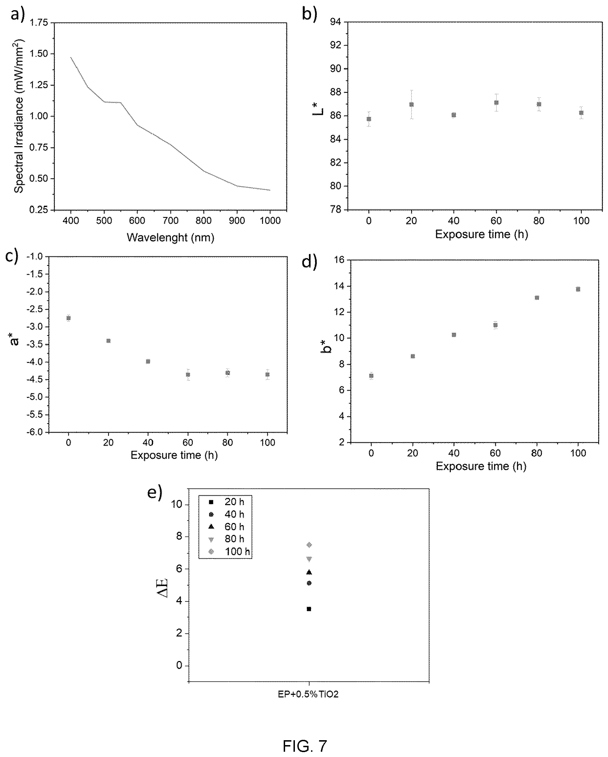

For the ultraviolet degradation, the samples were placed for 100 h continuously at a distance of 16 cm from an ultraviolet lamp (LCS-100 Oriel) presenting the irradiation spectrum shown in Figure 7. To evaluate the ultraviolet resistance of the reference sample, the variation of the Raman response was studied at 20 h exposure intervals with the BWTek iRaman portable Raman spectrometer and 785 nm laser, using the microscope and 20x objective, with a power of 128 mW and an integration time of 6 s. Raman spectra results showed no variations in the initial bands of the material, nor variations in the intensity of the TiO₂, only a small increase in the fluorescence background was observed for the material exposed after 80-100 h. The result obtained translates into an increase in the fluorescence background. The result obtained shows a high stability to ultraviolet light of the reference material obtained.

The aesthetic properties of the composite material were also studied by characterising the CIELAB colour variation of the material with exposure to the sunlight at the same time intervals, with a Konica Minolta colourimeter using a D65 illuminant and a specular component exclusion (SCE) according to ISO 11664. Figure 7-B-E show the parameters L*. a*, b* and the colour variation ΔE respectively. From the results, it can be seen that there is a slight colour variation as the exposure time of the EP+0.5%TiO₂ composite material increases. The value that mainly influences an increase of the ΔE is mainly due to a yellowing of the sample (higher b* values with exposure), which is typical for epoxy resins that eventually undergo UV degradation. However, this degradation is mainly aesthetic, since, as mentioned above, it does not result in a change of the Raman spectrum.

For humidity resistance, the EP+0.5%TiO₂ sample was deposited in a 99% relative humidity controlled VCK30 chamber at 25 °C for 120 h. Again, Raman spectra were taken with the BWTek iRaman portable Raman spectrometer and 785 nm laser at different exposure times. Measurements were performed with the microscope and 20X objective, with a power of 290 mW and an integration time of 3 s.. Regarding the results obtained from the humidity test of the standard sample, no differences were found in the Raman spectra obtained at the different exposure intervals (0, 24, 48 and 120 h). Besides, no variations in intensity or fluorescence have been observed, so the reference material is resistant to moisture.

### Comparative Example 1: Preparation of an epoxy composite material incorporating 0.5% wt of titanium dioxide for Raman intensity calibration

A sample of composite material was prepared following steps (a) and (b) of General Procedure 1 and the precursor mixture of epoxy and the dried TiO₂ particles were mixed using an Ika Imlab OST Basic (Yellowline) blade shaker, at 300 rpm for 3 min. Steps (f), (g) and (h) described above were then performed on the mixture resulting from the aforementioned mixing step.

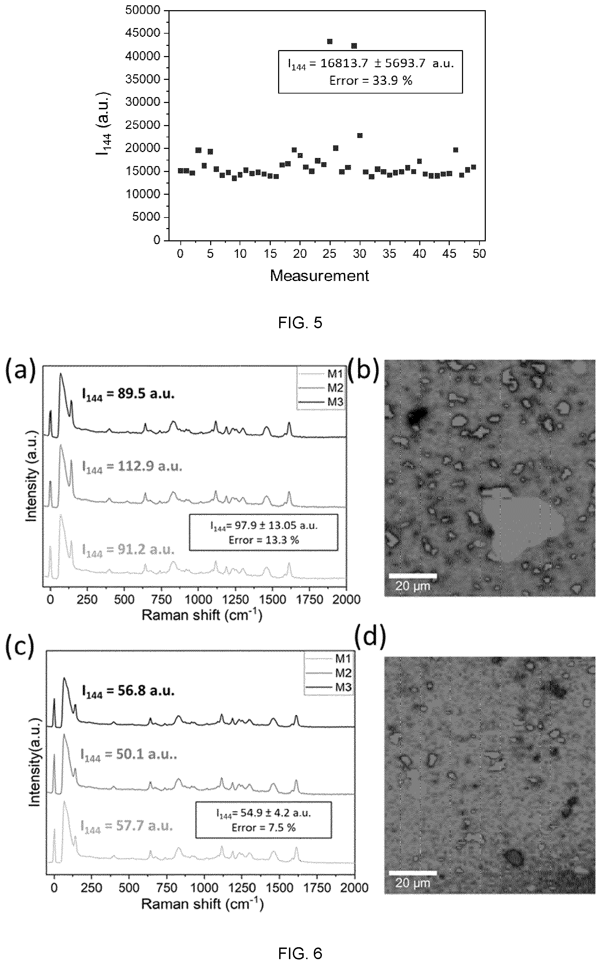

Figure 5 shows the maximum intensity values of the TiO₂ main peak in the same manner as in Figure 3, obtained after performing 50 Raman spectra using the same BWTek iRaman spectrometer and the same conditions with a 785 nm laser at 290 mW, integration time of 6 s and 20X objective. The results of Figure 5 show that there is a greater standard deviation in the values, with a deviation more than 10 times greater than with the material of Example 1.

The sample of the present comparative example was also analysed by confocal Raman microscopy, under the same conditions as described above in Example 1. Figure 6 a) and c) show the average spectra of this material with two different objectives (20X and 100X respectively) and the surface images of the same (Figure 6b and d) as was done for the product of Example 1. Again, confocal Raman microscopy shows that there is not the same homogeneity of TiO₂ particles in the epoxy matrix. Higher amounts of agglomerates and are observed.

### Example 2: Preparation of a reference sample for calibration of Raman shift and intensity

The material prepared in Example 1 was inserted in a polystyrene support previously treated mechanically to form a groove within the support, said groove having a controlled thickness. Different thicknesses of the groove were implemented: 200, 300, 400 µm. The employed polystyrene material (Resopal, Madrid) is a smooth transparent plate of size 2000x1000x4 mm having an arithmetic average surface roughness (Sₐ) of 0.54±0.04 µm. To obtain the final sample, the following steps were followed:
i) The polystyrene was cut to size 20x20 mm with a UNIZ SC continuous band saw.
j) At least one groove was machined on each 20x20 mm support, with a width of 4 mm and with different thicknesses in each case (200, 300, 400 µm), using a Leadwell V30 CNC milling machine with a 3-lip, 4 mm diameter face milling cutter for soft materials. The speed used was 6000 rpm, with a feed rate of 120 mm/min and a cutting speed of 75 m. A water-based lubricant coolant was used throughout the process. The final groove roughness obtained was Sₐ=1.29±0.07 µm. The machining of two or more grooves offers the possibility of making two or more different concentrations of TiO₂ in the same sample or even adding new types of particles.
Subsequently, the composite material was fabricated as described in Example 1 in steps a), b), c), d) and e) to afford a composite material precursor.
k) Once the composite material precursor was obtained, it was deposited in liquid, non-cured, form on the polystyrene groove with a plastic pipette and submitted to a curing process at 40 °C for 48 h.
(I) Excess resin was removed from the surface of the polystyrene to respect the initial thickness of the groove. For this purpose, a Leadwell CNC milling machine was used, using a 3-lip end mill with a diameter of 10 mm. The sample was placed in a vacuum tool. The speed used was 5000 rpm, with a cutting speed of 157 m and the feed rate was firstly 555 m/min for initial roughing, followed by a finishing process with a feed rate of 300 m/min. In order to prevent the workpiece from heating up, a water-based lubricant was used as a coolant during the grinding process. The roughness of the samples after grinding was Sₐ=0.97±0.07 µm for the polystyrene and Sₐ=2.95±0.31 µm for the composite material.
m) The samples were polished in a single step to respect the groove thickness. For this purpose, a Vibromet 2 automatic polishing machine was used with a Buehler nylon cloth, Neurtek polycrystalline diamond of 1 µm and Neurtek water-based lubricant for at least 48 h and an amplitude of 70%, in order to obtain an optically polished surface. In order to carry out the polishing process, the ground polystyrene samples were glued to brass holders of 30 mm diameter and 25 mm height, with a transparent acrylic double-sided adhesive tape (Resopal, Madrid). These brass supports comprising the glued samples were inserted into the different sample holders of the Vibromet 2. The final roughness of the sample obtained was Sₐ=0.48±0.05 µm for the polystyrene and Sₐ=0.76±0.09 µm for the composite material.

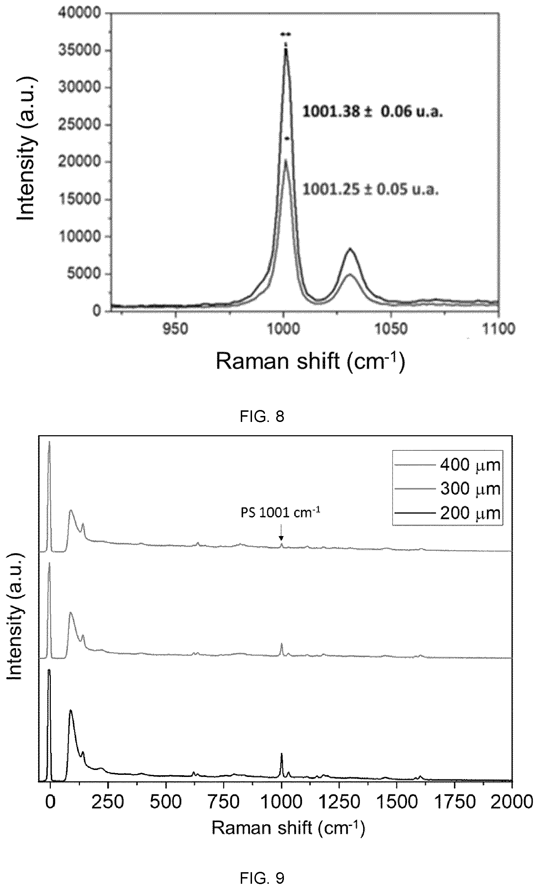

The polystyrene was also characterised using the BWTek iRaman spectrometer used in Example 1. Figure 8shows the Raman spectrum obtained both on the surface of the polystyrene sample (**) and inside the groove (*). Figure 8 shows that the machining does not influence the main Raman bands of the polystyrene, as no variation in the Raman shift is observed. The only influence is the less intense signal in the groove due to a higher roughness produced by the machining.

Once the final sample of composite material and polystyrene was obtained, the Raman study was carried out with the BWTek iRaman spectrometer as described in Example 1. The measurements were taken with the 785 nm laser, 20X objective microscope, 252 mW power and 3 s integration time. Figure 9 shows that the thickness of the groove where the EP+0.5%TiO₂ composite was deposited influences the intensity of the signal obtained for the polystyrene material of the groove and allows the Raman signal of the polystyrene to be seen to a greater or lesser extent. In particular, the greater the thickness of EP+0.5%TiO₂, the lower the Raman signal obtained from the polystyrene.

The manufacture of these materials thus allows the Raman shift of the main polystyrene peak to be obtained in the same measurement and in the same Raman spectrum, which allows the simultaneous calibration of the Raman shift, while the TiO₂ signal at 144 cm⁻¹ is obtained for the calibration of the Raman intensity. This is particularly the case when the thickness of the groove is sufficiently low to allow the peak of the support to be distinguished.

A study of the ultraviolet degradation and moisture resistance of the polystyrene used was also carried out as described in Example 1 for EP+0.5%TiO₂ material. For this, Raman spectra were performed again on the polystyrene sample at different times of UV exposure. Raman spectra were performed with the 20x objective of the BWTek with a 785 nm laser, using a 49 mW power and 4 s as integration time. Results of different Raman spectra taken after different intervals of exposure to the ultraviolet source showed that the signal decays with time, but there is no Raman shift of the main bands of the polystyrene. Moreover, in this case, the fluorescence of the spectrum does not increase with exposure time either. As there is no shift of the main Raman bands, the material is considered to have an acceptable ultraviolet resistance as it will not influence the calibration mode of the Raman shift.

Raman spectra to evaluate the humidity resistance for the different intervals, were taken again with the BWTek, microscope with a 20x objective, with a power of 87 mW and an integration time of 3 s. Raman spectra results showed that the polystyrene used as a reference material is not affected by the presence of humidity, as no differences were found in the main Raman bands of polystyrene in the Raman spectra at the different intervals (0, 24, 48 and 120 h)

### Example 3: Reference sample incorporating various amounts of TiO₂ particles

In a further study, the same procedure described in Example 1 was followed to obtain composite materials having the following weight percentages of TiO₂ in the epoxy matrix: 0.1, 0.25, 0.75, 1, 1.25, 1.5, 1.75 and 2%. These composite materials were then deposited on the polystyrene supports as previously described in Example 2, in this case using 300 µm grooves. A calibration line can be made with different weight percentages of TiO₂ for Raman intensity quantification.
The Raman response of the new EP+TiO₂ composites was evaluated by taking at least 85 spectra of each percentage of TiO₂ and determined with a BWTek spectrometer with a 785 nm laser at 290 mW, 2.5 s integration time and 20x objective. Results of different Raman spectra showed that as the amount of TiO₂ increases, the Raman intensity of all the TiO₂ Raman bands increases, being observed with greater intensity in the main Raman band at 144 cm⁻¹. In addition, as the amount of TiO₂ increases, the signal of the polystyrene (1001 cm⁻¹) decreases.

### Example 4: Calibration of Raman spectrometer

The designed reference sample of EP+0.5%TiO₂ allowed to calibrate and to twin different Raman devices. To do this, an algorithm or a correction factor was calculated for each Raman twinning, after calculating the intensity of the main Raman band of TiO₂ (144 cm⁻¹) at different laser powers. The process described below is the one that should be carried out every time two or more Raman devices want to be twinned with the new designed sample.

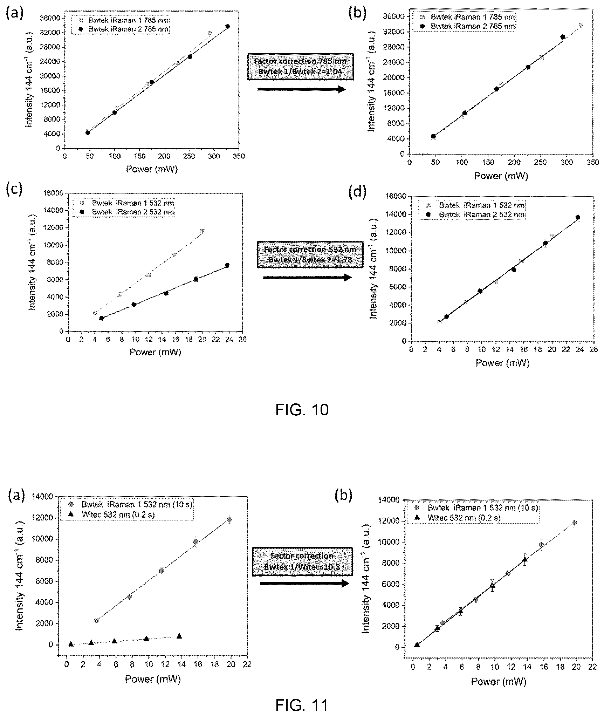

First of all, a Raman relative intensity correction of all Raman spectra was performed with a LED (Light Emitting Diode) lamp. Depending on the laser wavelength, it was corrected with a visible light LED (for 532 nm) or a NIR light LED (785 nm) lamp. Figure 10 shows the twinning obtained for two different Raman devices that are the same model (BWTek iRaman 1 and BWTek iRaman 2) in two different wavelengths. Theoretically, since these two Raman devices are the same model, they should have very equal Raman responses, since they have the same components and the same optics. However, despite the fact that they are made the same way, the optical paths always vary from one Raman equipment to another. Calibration measurements were performed for the two equipment with two different wavelengths: 785 nm and 532 nm. The measurements were obtained with the Raman measurement probe, with the same integration time for each equipment: 8 s in the 785 nm and 10 s in 532 nm. The integration times were adjusted considering both the signal/noise of the Raman spectrum and the maximum number of counts of the Raman equipment obtained for 100% power. The average of 10 different Raman spectra was obtained at different points of the sample and each measurement is the result of 5 accumulations. Laser powers chosen were those corresponding to 100, 80, 60, 40 and 20% of the total power of each of the two Raman devices.

Figure 10 shows the Raman intensity of the 144 cm⁻¹ band with respect to the laser power (mW) for each equipment (BWTek iRaman 1 and 2) and each wavelength (785 and 532 nm respectively). It was observed that in no case the regression lines obtained for each BWTek iRaman spectrometer coincide completely. To calculate the correction factor for each wavelength, the slopes of the regression lines obtained in each Raman device were considered, obtaining a correction factor of BWTek 1/BWTek 2 of 1.04 for the 785 nm and 1.78 for the 532 nm. In this case, the correction factors were very close to 1, which means that there are no large variations between the two twinned devices. After having applied the correction factor obtained for each wavelength, it could be observed how the regression lines obtained for both Raman devices are completely superimposed, managing to twin ant to calibrate the y-axis or Raman intensity for the two BWTek iRaman.

In addition, the same type of calibration has been carried out in two totally different Raman equipment. In this case, the BWTek iRaman 1 is compared with a Witec high-resolution confocal Raman device. In fact, the measuring method was different since in the BWTek iRaman spectrometer punctual spectra were taken, while in the Witec device the average spectrum was obtained after a previous mapping of the sample.

In this case, the measurements were performed with a laser with a wavelength of 532 nm. Measurements were taken with a microscope and a 20x objective and the Raman response was obtained for each equipment in similar areas. The average of 10 different spectra was obtained at different points of the sample for the BWTek iRaman device, being the spot laser of 102 µm (area measured 8171 µm²). For the Witec device, the average of 3 different images was obtained, being the mapping area 90 × 90 µm and 45 × 45 pixels (area=8100 µm²). Besides, being completely different Raman equipment, the integration times necessary for the measurements have been different, using 10 s for the BWTek and 0.2 s for the Witec. The integration times were adjusted considering both the signal/noise of the Raman spectrum and the maximum number of counts of the Raman equipment obtained for 100% power.

In Figure 11a, the lines obtained for each Raman equipment were shown again, seeing how the intensity of the main TiO₂ band varies at 144 cm⁻¹ with different laser powers. In this case, it can be seen how the slopes are more different than for the first twinning (Figure 10 a and c). However, after calculating the correction factor again (BWTek 1/Witec = 10.8), it was observed how both lines overlap (Figure 11b), having been able to twin and calibrate the intensity for both Raman devices despite their great differences. The correction factor was higher than those obtained in the BWTek twinning (Figure 10) due to the large variations between these Raman devices.

This twinning focuses on the calibration of the y-axis (Raman intensity). However, the advantage of also having in the standard sample, a piece of polystyrene also allows the calibration of the x-axis (Raman shift) in the same measure (in non-confocal Raman equipment) or in a measure above the polystyrene area as mentioned in previous examples.

### Example 5: Chemometric measurements using samples of Example 3

In addition to the calibration that these samples allow both in terms of Raman intensity and Raman shift, the samples manufactured in Example 3 can be used to perform various chemometric studies through the quantification of Raman intensity. In this case, the example of the quantification of the weight percentage of TiO₂ particles in the epoxy matrix in the weight percentage range of 0.1 to 2% deposited on the polystyrene support is determined. For the chemometric study, the BWIQ software was used. Raman measurements for the chemometric study were as performed in Example 3. At least 85 Raman spectra were performed for each of the TiO₂ compositions of Example 3 using a BWTek spectrometer with a 785 nm laser at 290 mW, 2.5 s integration time and 20X objective. Two models were performed to demonstrate the possibility of classification and quantification of the reference samples obtained.

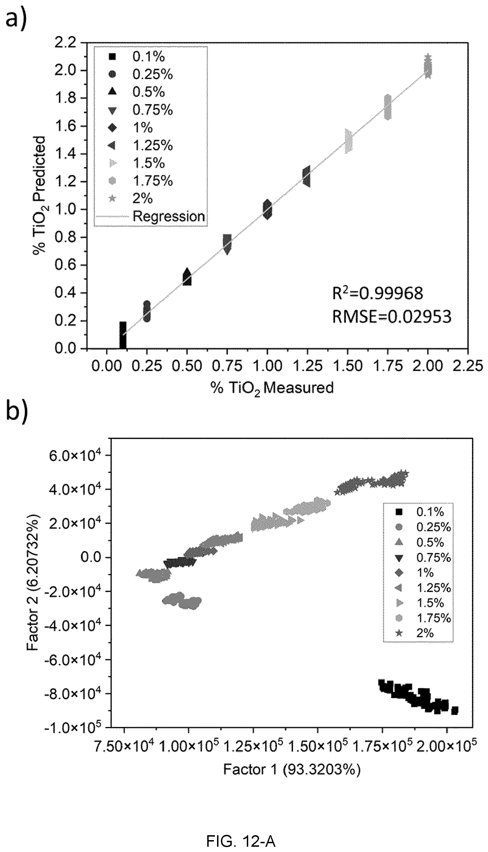

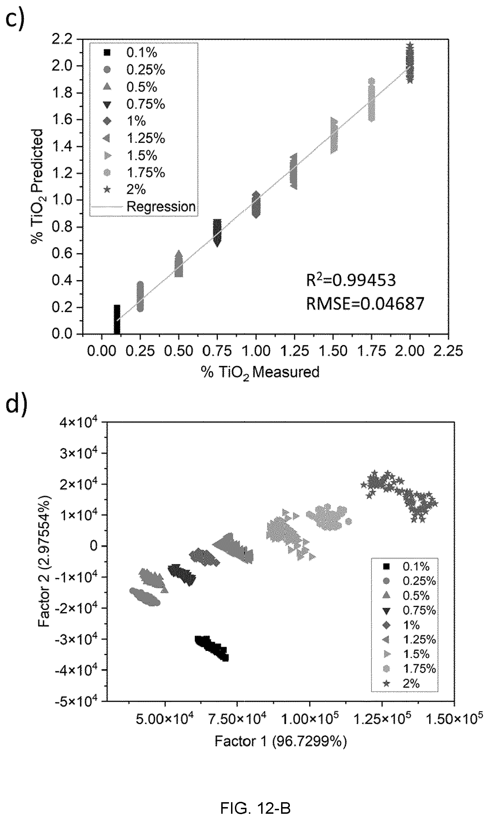

Both models were performed taking into account a 60/40 ratio of calibration/validation spectra, which were randomly selected. In model 1, no preprocessing was performed, taking the whole Raman spectrum as data source. In model 2, the range where the Raman bands of TiO₂ appear, from 125 to 700 cm⁻¹, was selected to eliminate the presence of the main bands of polystyrene in the chemometry. In both models, a PLS (Partial least Square) regression was performed with Kenel's method to obtain the calibration lines and the PCA (Principal Component Analysis). Figure 12 shows the plots of the predicted TiO₂ weight percentages versus the measured TiO₂ weight percentages in each Raman spectrum for each model (Figure12-A a) and Figure 12-B c)) and the obtained PCA (Figure 12-A b) and Figure 12-B d). The first model corresponds to Figure 12-A and the second model to .

The obtained lines allow observing the measured TiO₂ percentage versus the predicted TiO₂ percentage. Data dispersion within the same TiO₂ quantity group is shown. In the case of model 1, the scatter is smaller, although in both cases the R² coefficient of the regression is high. On the other hand, with regard to the PCA, both allow grouping the data according to the TiO₂ content, but in the second model, whereby the polystyrene-dependent part is neglected, more isolated groups are obtained, which renders data grouping easier.

By means of the specific calibration lines obtained for these reference materials, the percentage of TiO₂ in other test samples can be predicted. In the following section, it is intended to verify the two proposed chemometric models. For this purpose, 9 new Raman spectra were added, different from those used for the chemometric models. The algorithms created for each model allow the predicted percentage of TiO₂ to be obtained from each of the new spectra (Table 1). The results obtained show that both models are able to predict with great accuracy the percentage by weight of TiO₂ in each sample, obtaining better results in the case of model 1, where chemometrics is carried out with the entire Raman spectrum obtained for each case. This type of reference samples and chemometric studies could be carried out with other reference materials for different applications within Raman spectroscopy, making it possible to create calibration lines that allow the quantity of a given element to be quantified with good accuracy.

**Table 1: Predicted TiO₂ values for each problem samples.**

| | Predicted % TiO₂ | |
|---|---|---|
| Theoretical % TiO₂ | Model 1 | Model 2 |
| 0.10 | 0.11 | 0.16 |
| 0.25 | 0.24 | 0.29 |
| 0.50 | 0.50 | 0.53 |
| 0.75 | 0.75 | 0.82 |
| 1.00 | 1.01 | 0.94 |
| 1.25 | 1.29 | 1.28 |
| 1.50 | 1.45 | 1.41 |
| 1.75 | 1.73 | 1.77 |
| 2.00 | 2.00 | 1.99 |

### Example 6: Preparation of reference samples with other filler materials than TiO₂

In the current example, further reference samples incorporating particles of different materials characterized for having significant Raman scattering bands at different shifts of the spectrum. Thus, new reference samples were prepared with particles of CeO₂ (main Raman shift at 465 cm⁻¹) and particles of diamond (Raman shift at 1332 cm⁻¹).
The CeO₂ reference particles were purchased from Alfa Aesar with 99.9% purity and exhibit an average particle size of d₅₀=1.7 µm. These particles were pre-milled to obtain a smaller mean particle size using an attrition mill. The process consisted of a grinding the particles with zircon balls stabilised with yttria, using two grinding steps of 3 h each employing balls of different sizes: a first stage with 2 mm balls and a second stage with 2 mm balls. This resulted in an average particle size of CeO₂ particle size dso=1.1 µm. The diamond reference particles were provided by Diprotex, and had a particle size in the range of 1-2 µm.

For the fabrication of the reference materials in both cases, the particles were added in the epoxy resin (EP) as described above in steps a)-h) of Example 1 by replacing the titanium oxide particles with the particles of CeO₂ or diamond. The new composite materials were then deposited on the polystyrene support as described above in steps i)-m) of Example 2.

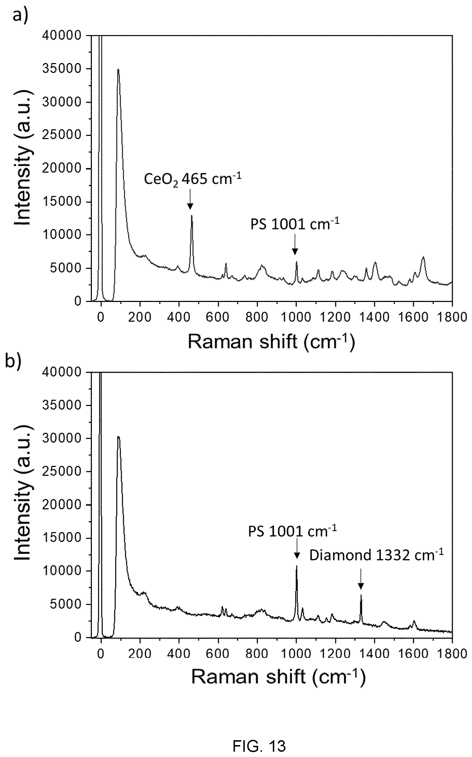

Raman characterisation was carried out using a BWTek iRaman spectrometer with the excitation laser of 785 nm excitation laser. The microscope with 20x objective was used for both reference materials. The measurement conditions were 0.9 mW power and an integration time of 60 ms. The spectra obtained were the average of 10 Raman spectra for each of the samples studied. Figure 13 shows the average Raman spectra obtained for the new reference samples with CeO₂ (Figure 13a) and diamond (Figure 13b) in 200 µm thick grooves on the polystyrene supports.

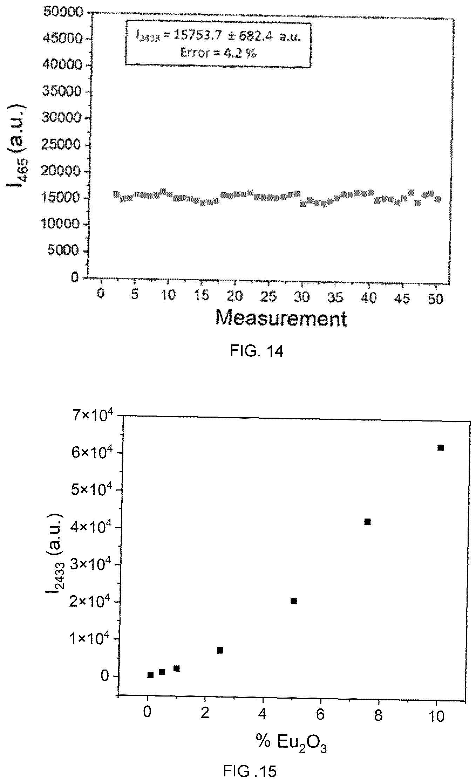

In addition, as an example in the 2% CeO₂ composite materials, Raman spectroscopy also verifies the dispersion and homogeneity of the CeO₂ particles in the epoxy resin. Figure 14 shows the maximum intensity of the CeO₂ main peak ((I465) for each of the 50 measurements performed. Thus, the homogeneity of the sample can be confirmed, where an average of 15753.7 a.u. and a standard deviation of 682.4 a.u. have been obtained for these measurement conditions. The error of the measurement deviation is thus 4.2%, as an example.

### Example 7: Preparation of a reference sample for photoluminescence

In the present example, a reference sample is prepared following General Procedure 1 except that the titanium dioxide particles of Example 1 are replaced with particles of Eu₂O₃, a photoluminescent material. Eu₂O₃ (Xi'an Function Material Group Co. LTD, China) luminescent particles having a cubic crystalline structure and a d₅₀ particle size of 4.83 µm were used as raw material. To obtain smaller sizes, prior grinding in ethanol was carried out for the conditioning of the particle size with an attrition mill. The process consisted of grinding with yttria-stabilized zircon balls, using three periods of 3 h with balls of different sizes: a first stage with 2 mm balls, followed by a second stage with 1 mm balls and finally a last stage with 0.5 mm diameter balls. Thus, a d₅₀ of the ground Eu₂O₃ particles of 0.6 µm was obtained.

Different homogeneous reference samples were made with Eu₂O₃ particles in an epoxy matrix (EP) as previously described in steps a)-h) of Example 1 using different percentages by weight of Eu₂O₃ (percentages by weight of 0.1, 0.5, 1, 2, 5, 7.5 and 10%). The Raman characterization of the different luminescent composite materials made of EP+Eu₂O₃ was carried out with the equipped BWTek iRaman portable Raman spectrometer. For the characterization, the excitation laser of 532 nm was used and the spectra were taken through the microscope with a 20X objective. The measurement conditions were 0.9 mW of power and an integration time of 60 ms. The spectra obtained were the average of 10 spectra for each of the samples studied. Raman measurements showed the spectra obtained by Raman for each of the 10 different EP+Eu₂O₃ compositions manufactured, and the luminescent response for each composite material. In this case, the spectra obtained did not show Raman bands of the materials studied, but the signal obtained is the luminescent intensity of EP+ Eu₂O₃, which increases with the percentage of Eu₂O₃ particles. In addition, the maximum intensity of the main Eu₂O₃ band (2433 cm⁻¹) obtained in Raman measurements is shown in Figure 15 for each of the 10 compositions.

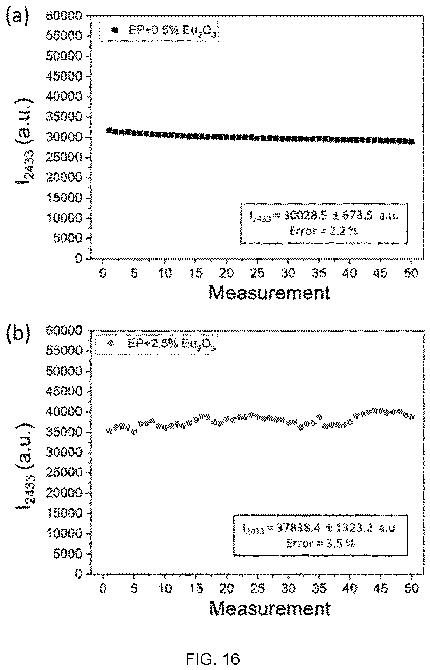

The homogeneity of Eu₂O₃ samples were also studied. Figure 16 shows the results obtained from the intensity of the main Eu₂O₃ Raman band (2443 cm⁻¹) at 50 different points of the sample for the 0.5% (Figure 16a) and 2.5% Eu₂O₃ (Figure 16b) samples as an example. The average for the 0.5% sample was 30028.5 a.u. and a standard deviation of 673.5 a.u. have been obtained for these measurement conditions. The error of the measurement deviation is thus 2.2%, as an example. In the case of the 2.5% composition, the average was 37838.4 a.u. and the standard deviations was 1323.2 a.u., being the deviation error 3.5%. Therefore, the homogeneity of these composite materials is also ensured.

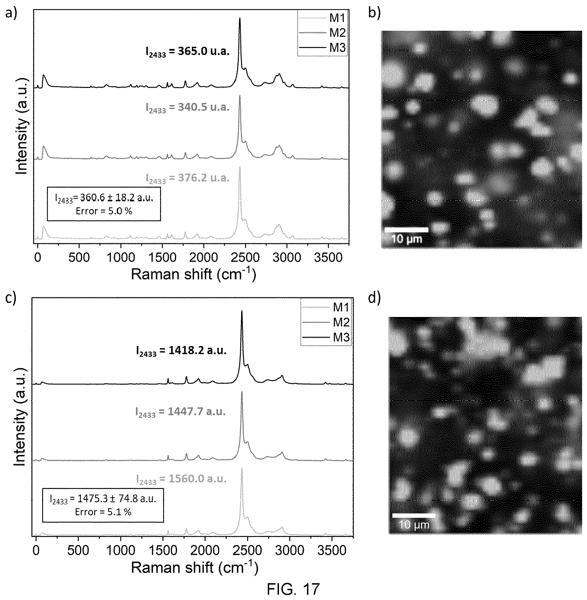

The resulting composite sample was also characterised with a Witec Alpha 300RA Confocal Raman Microscope (Ulm, Germany) using a 532 nm excitation laser with a fibre collection of 50 µm diameter and a power of 0.5 mW (Figure 17). Three measurements were performed on three different areas of the samples (M1, M2 and M3) with a 20X (A.N. 0.4) objective. The scanning area for the Raman image was 50x50 µm and 50 ×50 pixels for each map. The integration time used per spectrum was 0.2 s. The collected Raman spectra were analysed using the Witec Control Plus software (Ulm, Germany). For the treatment of the results obtained by Confocal Raman microscopy, "cosmic ray removal" (CRR) and "background subtraction" (BSub) were performed. The results show a great homogeneity of the EP+0.5%Eu₂O₃ and EP+2.5%Eu₂O₃ samples, as the average intensity is similar in each of the maps made. Measurement deviation errors of no more than 5.1% have been obtained in both cases. In the images of the surface of the composite materials (Figure 17-a b and Figure 17-b d), it can be seen how the Eu₂O₃ particles (white zone), both individually and in small agglomerates, are homogeneously distributed in the epoxy matrix (black zone), giving in any case similar average Raman spectra.

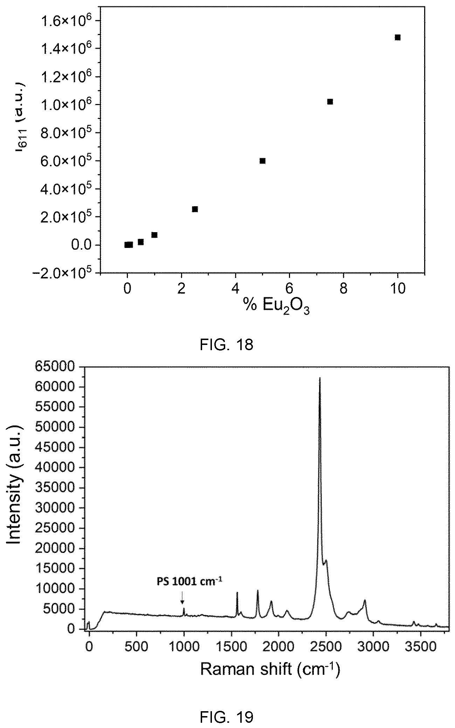

On the other hand, the luminescent response of the compositions of the composite materials was also studied with a spectrofluorometer (Edinburgh Instruments, FS5), using a low current PMT 900 detector with a range of from 460 to 740 nm. The excitation wavelength used was 405 nm and with a 35.2 µW power. The measurements were made with a 1 nm step and a dwell time of 0.5 s. The average luminescence emission spectra results showed as the luminescent response increases with the percentage of Eu₂O₃. The maximum luminescent intensity values of the main luminescence band (I₆₁₁) for each composition obtained from each luminescent spectra are shown in Figure 18

The EP+%Eu₂O₃ composite material was also deposited on polystyrene supports following the procedure described in Example 2. Figure 19 shows a Raman spectrum measured with a BWTek instrument having a 532 nm laser at 7.7 mW power, integration time of 1 second and an objective X20 of a reference standard sample of EP+0.5%Eu₂O₃ in a 200 µm thick groove machined in the polystyrene support. Figure 19 shows both the main band of polystyrene at 1001 cm⁻¹, as well as the photoluminescence signal obtained by Raman of Eu₂O₃. The prepared sample thus allows both the calibration of the photoluminescence and the Raman shift in the x-axis.

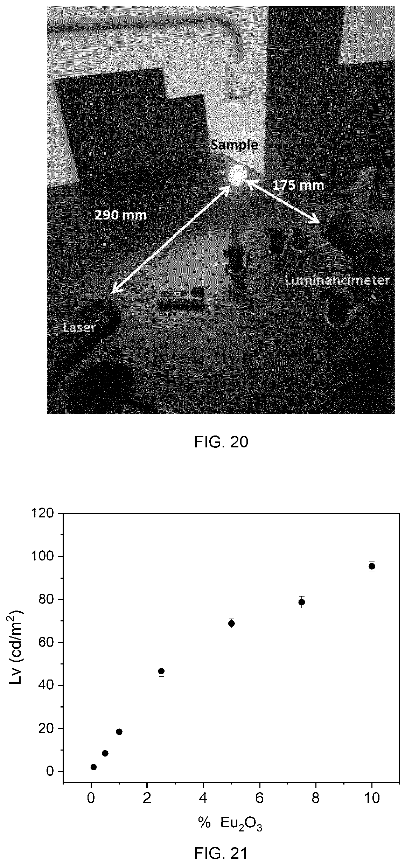

In order to correlate and obtain the real luminance of each Eu₂O₃ fabricated standard material, it has been measured with a luminancimeter LS-150 Konica-Minolta using a close-up lens No. 122 that measures a circle of diameter 3.2 mm. The measurement scheme can be seen in Figure 20. In order to obtain a photoluminescence response of EP+Eu₂O₃ samples, they were illuminated with a 405 nm laser with a power of 5.4 mW. Ten measurements of each Eu₂O₃ samples were obtained, performing measurements with an integration time of 0.1 s.

Figure 21 shows the average luminance (cd/m²) of each percentage of Eu₂O₃ obtained with the luminancimeter. This value is used to correlate the intensity obtained in a fluorimeter, with the cd/m² corresponding to a material excited with the same wavelength.

## Claims

1. Material for calibrating the intensity of Raman or photoluminescent spectroscopic measurement instruments operated at an excitation wavelength, said material having a substantially uniform thickness, comprising:
- a thermoset polymer matrix that is substantially transparent at said excitation wavelength; and
- particles of a metal oxide, a metal carbonate , a carbonaceous material or a mixture thereof, dispersed in said thermoset polymer matrix;
**characterized**
- **in that** the Raman cross-section at said excitation wavelength of said metal oxide, metal carbonate, or carbonaceous material is higher than the Raman cross-section of the thermoset polymer matrix at said excitation wavelength; and
- **in that** the particles are homogeneously dispersed in the matrix such that the standard deviation over 50 measurements of the intensity of the most intense peak assignable to the metal oxide, metal carbonate, or carbonaceous material of the Raman response of said material at said excitation wavelength is lower than 5.5%;
with the proviso that when the material is for calibrating a photoluminescent spectroscopic measurement instrument, the material of the particles is photoluminescent at said excitation wavelength.

2. Material as defined in claim 1 wherein:
- the metal oxide is selected from the group consisting of titanium oxide, cerium oxide europium oxide or mixtures thereof;
- the metal carbonate is selected from the group consisting of magnesium carbonate, calcium carbonate or mixtures thereof, and
- the carbonaceous material is diamond; preferably the metal oxide is titanium dioxide.

3. Material as defined in any one of claims 1 to 2 wherein the particles are in an amount from 0.01% to 15% by weight of the total weight of the material, preferably from 0.1% to 2% by weight.

4. Material as defined in any one of claims 1 to 3 wherein the material has a thickness of between 100 micrometres and 3 mm.

5. Material as defined in any one of claims 1 to 4 wherein the thermoset polymer matrix is an epoxy resin and/or the average size of the particles is of between 50 nm and 2.5 micrometres.

6. Material as defined in any one of claims 1 to 5 having an average superficial roughness of below 1 micrometres, preferably of below 0.8 micrometres wherein the average superficial roughness is measured with an optical profilometer or roughnessmeter.

7. Method for the production of a material according to any one of claims 1 to 6 comprising the steps of
(i) providing a curable liquid precursor mixture of the thermoset polymer matrix;
(ii) providing substantially dry particles of metal oxide, metal carbonate, carbonaceous material or a mixture thereof;
(iii) submitting a mixture of the liquid mixture of step (i) with the particles to a mixing step with a shear force equivalent to the shear force produced by a stirring of at least 10000 rpm;
(iv) milling the product of step (iii); preferably through a three-roll mill;
(v) curing the mixture resulting from step (iv) so as to produce the thermoset polymer.

8. Product obtainable by the method of claim 7.

9. Composition comprising one or more materials as defined in any of claims 1 to 6 or 8 and a solid support, each material being arranged in a groove formed within said solid support, thus providing a substantially flat surface.

10. Composition according to claim 9 wherein said solid support consists of polystyrene, said polystyrene having preferably a superficial average roughness of below 0.7 micrometres.

11. Composition according to any one of claims 9 to 10 wherein each groove has a thickness of between 0.1 and 0.5 mm.

12. Use of a material as defined in any one of claims 1 to 6 or 8 or of a composition as defined in any one of claims 9 to 11 for calibrating the intensity of Raman or photoluminescent spectroscopic measurement instruments operated at an excitation wavelength.

13. Use of a composition as defined in any one of claims 10 to 11 for calibrating the intensity and/or shift of Raman or photoluminescent spectroscopic measurement instruments operated at an excitation wavelength.

14. Method of calibrating the intensity and/or shift of a Raman or photoluminescent spectroscopic measurement instruments operated at an excitation wavelength comprising the steps of:
- when the method is for calibrating the intensity of a Raman or photoluminescent spectroscopic measurement instruments operated at an excitation wavelength:
(i) irradiating a composition according to any one of claims 1 to 6 or 8 or a composition according to claim 9 to 11 at said excitation wavelength; whereby the metal oxide, metal carbonate, or carbonaceous material is in a known amount and relates to an average reference intensity value of the most intense peak assignable to the metal oxide, metal carbonate, or carbonaceous material respectively;
(ii) measuring the intensity of the most intense peak assignable to the metal oxide, metal carbonate, or carbonaceous material, thus providing a measurement value,
(iii) comparing the measurement value obtained in (ii) with the average reference intensity value of the most intense peak assignable to the metal oxide, metal carbonate, or carbonaceous material and,
(iv) adjusting the instrument so that the average reference intensity value of the most intense peak assignable to the metal oxide, metal carbonate, or carbonaceous material and the measurement value are substantially the same; or; alternatively,
- when the method is for calibrating the intensity and/or shift of a Raman or photoluminescent spectroscopic measurement instruments operated at an excitation wavelength:
(i) irradiating a composition according to any one of claims 1 to 6 or 8 or a composition according to any one of claims 10 to 11 at said excitation wavelength; whereby the metal oxide, metal carbonate, or carbonaceous material is in a known amount and relates to an average reference intensity value of the most intense peak assignable to the metal oxide, metal carbonate, or carbonaceous material, and whereby the solid support is assigned a reference shift value;
(ii) measuring the intensity of the most intense peak assignable to the metal oxide, metal carbonate, or carbonaceous material, thus providing a measurement value of intensity, and measuring the shift of the one or more peaks assignable to the solid support;
(iii) comparing the measurement values obtained in (ii) with the average reference intensity and shift values of (i) and,
(iv) adjusting the instrument so that the average reference intensity and shift values of and the measurement values are substantially the same.

15. Use of a material according to any one of claims 1 to 6 or 8 or of a composition according to claim 9 to 11 in harmonizing the results of Raman or photoluminescence spectra made by a plurality of Raman or photoluminescence instruments or in the quantification of the content of the metal oxide or the carbonaceous material in a sample.
